# EUROPÄISCHE PATENTSCHRIFT

(11) **EP 4 505 971 B1**
(45) Veröffentlichungstag und Bekanntmachung des Hinweises auf die Patenterteilung: **25.03.2026**
(21) Anmeldenummer: 23191046.4
(22) Anmeldetag: 11.08.2023
(51) Int. Cl.: A61C 13/01, B33Y 80/00

(54) **VERFAHREN UND VORRICHTUNG ZUR HERSTELLUNG EINER DENTALRESTAURATION SOWIE VERWENDUNG**
METHOD AND DEVICE FOR PRODUCING A DENTAL RESTORATION AND USE THEREOF
PROCÉDÉ ET DISPOSITIF DE FABRICATION D'UNE RESTAURATION DENTAIRE ET UTILISATION

(43) Veröffentlichungstag der Anmeldung: 12.02.2025
(73) Patentinhaber: Ivoclar Vivadent AG, 9494 Schaan (LI)
(72) Erfinder: JOHN, Hendrik, 9487 Gamprin (LI); PULIDO, José, 9443 Widnau (CH)
(74) Vertreter: Maiwald GmbH

(56) Entgegenhaltungen:
- CN-A- 111 136 915
- US-A1- 2013 224 454
- US-A1- 2016 228 222
- US-A1- 2018 325 635

## Beschreibung

Die Erfindung betrifft ein Verfahren zur Herstellung einer Dentalrestauration aus wenigstens einem Material einer ersten Materialart.

Zudem ist die Erfindung auf eine Vorrichtung zur Herstellung einer Dentalrestauration aus wenigstens einem Material einer ersten Materialart gerichtet.

Außerdem betrifft die Erfindung eine Verwendung von ausschließlich einem ersten Ausgangsmaterial einer ersten Materialart, einem zweiten Ausgangsmaterial der ersten Materialart und einem dritten Ausgangsmaterial der ersten Materialart.

Dentalrestaurationen, zum Beispiel Ersatzzähne, Teil- oder Vollprothesen, sollen natürliche Zähne und/oder natürliches Zahnfleisch möglichst originalgetreu nachbilden. Auf diese Weise sollen Dentalrestaurationen von natürlichen Zähnen und natürlichem Zahnfleisch möglichst nicht optisch unterscheidbar sein. Dentalrestaurationen sollen also ein naturgetreues Aussehen aufweisen. Nachdem jedoch natürliche Zähne und auch natürliches Zahnfleisch eine ungleichmäßige Farbverteilung, d. h. wenigstens zwei Abschnitte unterschiedlicher Farbe, eine ungleichmäßige Farbhelligkeitsverteilung, d. h. wenigstens zwei Abschnitte unterschiedlicher Farbhelligkeit, und eine ungleichmäßige Opazitätsverteilung, d. h. wenigstens zwei Abschnitte unterschiedlicher Opazität, aufweisen, gestaltet sich die Herstellung von Dentalrestaurationen üblicherweise aufwendig. Das gilt sowohl für Varianten, in denen eine Dentalrestauration mittels einer Fräsoperation aus einem Rohling gefertigt wird, als auch für Varianten, in denen die Dentalrestauration mittels eines additiven Fertigungsverfahren hergestellt wird.

Es besteht somit ein Zielkonflikt zwischen der Naturtreue der Dentalrestauration und einer möglichst einfachen Herstellung derselben.

Die US 2018/0325635 A1 beschreibt ein Verfahren und ein System zum Aufbau eines Dentalobjektes.

In der US 2016/0228222 A1 wird ein dentaler Fräsrohling und ein Verfahren zum Formen des dentalen Fräsrohlings vorgestellt.

Die US 2013/0224454 A1 zeigt einen nicht-vorgefärbten, mehrschichtigen Zirkonoxid-Zahnrohling, der nach dem Sintern eine allmähliche Veränderung der Farbsättigung über die Dicke aufweist.

Die CN 111 136 915 A betrifft ein mechanisches und ästhetisches Zahnersatz-Design und ein 3D-Druckverfahren.

Die Aufgabe der Erfindung liegt darin, diesen Zielkonflikt aufzulösen oder zumindest abzumildern.

Die Aufgabe wird durch ein Verfahren gemäß Anspruch 1 zur Herstellung einer Dentalrestauration aus wenigstens einem Material einer ersten Materialart gelöst. Dabei weist ein Bereich der Dentalrestauration aus dem Material der ersten Materialart wenigstens zwei Abschnitte unterschiedlicher Farbe und wenigstens zwei Abschnitte unterschiedlicher Farbhelligkeit auf. Das Verfahren umfasst:
- Bereitstellen eines ersten Ausgangsmaterials der ersten Materialart, wobei das erste Ausgangsmaterial eine erste Farbe, eine erste Farbhelligkeit und eine erste Opazität aufweist,
- Bereitstellen eines zweiten Ausgangsmaterials der ersten Materialart, wobei das zweite Ausgangsmaterial eine zweite Farbe, eine zweite Farbhelligkeit und eine zweite Opazität aufweist, und
- Bereitstellen eines dritten Ausgangsmaterials der ersten Materialart, wobei das dritte Ausgangsmaterial eine dritte Farbe, eine dritte Farbhelligkeit und eine dritte Opazität aufweist,
- Aufbauen des Bereichs der Dentalrestauration aus dem Material der ersten Materialart durch räumliches Anordnen einer Mehrzahl von Volumensegmenten, wobei jedes Volumensegment ausschließlich aus einem oder mehreren ausgewählt aus erstem Ausgangsmaterial, zweitem Ausgangsmaterial und drittem Ausgangsmaterial gebildet ist.

In diesem Zusammenhang kann das Material der ersten Materialart ein Zahnersatzmaterial oder ein Zahnfleischersatzmaterial sein. Unter einem Volumensegment der Dentalrestauration wird ein Volumensegment verstanden, das im Vergleich zur Außenabmessungen der Dentalrestauration sehr klein ist. Damit ist das Volumensegment auch im Vergleich zu gegebenenfalls nachzubildenden Makro-Abschnitten der Dentalrestauration wie Zahnschneide, Dentinkern, Zahnhals oder Zahnfleischbasis sehr klein. Dabei kann das Volumensegment auch als Voxel bezeichnet werden. Das Voxel hat zum Beispiel eine Länge, eine Breite und eine Höhe von jeweils 50 Mikrometern. Die Tatsache, dass jedes Volumensegment ausschließlich aus einem oder mehreren ausgewählt aus erstem Ausgangsmaterial und zweitem Ausgangsmaterial gebildet ist, schließt dabei drei Alternativen ein. Gemäß einer ersten Alternative ist ein Volumensegment ausschließlich aus dem ersten Ausgangsmaterial gebildet. Gemäß einer zweiten Alternative ist ein Volumensegment ausschließlich aus dem zweiten Ausgangsmaterial gebildet. Gemäß einer dritten Alternative ist ein Volumensegment ausschließlich aus dem ersten Ausgangsmaterial und dem zweiten Ausgangsmaterial gebildet. In der dritten Alternative kann auch davon gesprochen werden, dass das Volumensegment ausschließlich aus einer Mischung des ersten Ausgangsmaterials und des zweiten Ausgangsmaterials gebildet ist. Im Kontext der vorliegenden Erfindung wird dabei unter einer solchen Mischung einerseits eine tatsächliche, physische Mischung der Ausgangsmaterialien verstanden. Andererseits wird unter einer solchen Mischung auch eine Anordnung von Ausgangsmaterialien verstanden, bei der die Ausgangsmaterialien physisch nicht vermischt werden, die Anordnung der Ausgangsmaterialien jedoch auf einem Maßstab erfolgt, der so klein ist, dass das menschliche Auge die einzelnen Ausgangsmaterialien nicht unterscheiden, d.h. auflösen, kann. In diesem Fall wird mittels des menschlichen Auges eine Mischung wahrgenommen, obwohl diese tatsächlich nicht vorliegt. Diesen Effekt machen sich unter anderem die Techniken des Half-Toning und des Ditherings zu Nutze. Die Tatsache, dass die Dentalrestauration wenigstens zwei Abschnitte unterschiedlicher Farbe und wenigstens zwei Abschnitte unterschiedlicher Farbhelligkeit aufweist, verleiht der Dentalrestauration ein naturgetreues Erscheinungsbild. Es versteht sich, dass dabei Abschnitte unterschiedlicher Farbe und Abschnitte unterschiedlicher Farbhelligkeit separat voneinander sein können, teilweise überlappen können oder vollständig überlappen können. Erfindungsgemäß kann dies unter Verwendung lediglich dreier Ausgangsmaterialien, d. h. des ersten Ausgangsmaterials, des zweiten Ausgangsmaterials und des dritten Ausgangsmaterials erreicht werden. Weitere Ausgangsmaterialien werden nicht benötigt und nicht verwendet. Aus diesem Grund ist das erfindungsgemäße Verfahren vergleichsweise einfach. Somit lässt sich mittels des erfindungsgemäßen Verfahrens eine naturgetreue Dentalrestauration aufwandsarm herstellen.

Dabei können die erste Farbe und die zweite Farbe grundsätzlich gleich oder unterschiedlich sein. Weiter können die erste Farbe und die zweite Farbe zum Beispiel durch ein Farbmodell oder eine Farblehre beschrieben werden. In diesem Zusammenhang können die erste Farbe und die zweite Farbe in einem RGB-Farbraum, also einem durch die Farben Rot (R), Grün (G) und Blau (B) definierten Farbraum beschrieben werden. Alternativ können die erste Farbe und die zweite Farbe in einem CMYK-Farbraum, also einem Farbraum der durch eine blaue Farbe (Cyan - C), eine rote Farbe (Magenta - M), eine gelbe Farbe (Yellow - Y) und schwarz (Key - K) definiert ist, beschrieben werden. In diesem Zusammenhang kann ein Farbraum allgemeiner auch als Farbbereich bezeichnet werden. Dabei kann ein Farbbereich eine oder mehrere Dimensionen aufweisen. Auch ist es möglich, die erste Farbe und die zweite Farbe in einem Farbspektrum, d. h. über eine zugehörige optische Wellenlänge oder Frequenz, zu definieren. Ferner ist es möglich, die erste Farbe und die zweite Farbe über ein Lab-Farbmodell, d. h. über einen Helligkeitswert (L-Wert), einen a-Farbwert entlang einer Achse, die durch die Farben grün und rot definiert ist, und einen b-Farbwert entlang einer Achse, die durch die Farben gelb und blau definiert ist, beschreiben. In einer bevorzugten Ausführungsform sind die erste Farbe und die zweite Farbe unterschiedlich. Die Dentalrestauration, genauer gesagt der Bereich der Dentalrestauration aus dem Material der ersten Materialart, kann also zumindest abschnittsweise die erste Farbe oder die zweite Farbe oder eine aus erster Farbe und zweiter Farbe generierte Mischfarbe aufweisen. Mit anderen Worten kann die Dentalrestauration, genauer gesagt der Bereich der Dentalrestauration aus dem Material der ersten Materialart, jede Farbe aufweisen, die durch ein Mischungsverhältnis der ersten Farbe und der zweiten Farbe entsteht. Die Mischungen aus der ersten Farbe und der zweiten Farbe definieren also einen Farbbereich.

Auch die erste Farbhelligkeit und die zweite Farbhelligkeit können grundsätzlich gleich oder unterschiedlich sein. In einer bevorzugten Ausführungsform sind die erste Farbhelligkeit und die zweite Farbhelligkeit unterschiedlich. Die Dentalrestauration, genauer gesagt der Bereich der Dentalrestauration aus dem Material der ersten Materialart, kann also zumindest abschnittsweise die erste Farbhelligkeit oder die zweite Farbhelligkeit oder eine aus erster Farbhelligkeit und zweiter Farbhelligkeit generierte Mischfarbhelligkeit aufweisen. Mit anderen Worten kann die Dentalrestauration, genauer gesagt der Bereich der Dentalrestauration aus dem Material der ersten Materialart, jede Farbhelligkeit aufweisen, die innerhalb eines durch die erste Farbhelligkeit und die zweite Farbhelligkeit definierten Farbhelligkeitsbereichs liegt.

Ebenso können die erste Opazität und die zweite Opazität grundsätzlich gleich oder unterschiedlich sein. Wenn die erste Opazität und die zweite Opazität gleich sind, lassen sich die Farbe und die Farbhelligkeit durch Mischen des ersten Ausgangsmaterials und des zweiten Ausgangsmaterials einstellen, wobei die Opazität unabhängig vom Mischungsverhältnis gleichbleibt. In einem Fall, in dem die erste Opazität und die zweite Opazität unterschiedlich sind, lässt sich die Opazität der Dentalrestauration, genauer gesagt die Opazität des Bereichs der Dentalrestauration aus dem Material der ersten Materialart, durch Mischen des ersten Ausgangsmaterials und des zweiten Ausgangsmaterials einstellen. Mit anderen Worten kann die Dentalrestauration, genauer gesagt der Bereich der Dentalrestauration aus dem Material der ersten Materialart, jede Opazität aufweisen, die innerhalb eines durch die erste Opazität und die zweite Opazität definierten Opazitätsbereichs liegt.

Es wird darauf hingewiesen, dass der Begriff Opazität reziprok für den Begriff Transluzenz steht und vorliegend der Einfachheit halber überwiegend der Begriff Opazität verwendet wird.

Der vorliegenden Erfindung liegt die Erkenntnis zugrunde, dass trotz der Tatsache, dass natürliche Zähne und natürliches Zahnfleisch eine ungleichmäßige Farbverteilung, d. h. wenigstens zwei Abschnitte unterschiedlicher Farbe, aufweisen, die in einer Dentalrestauration nachempfunden werden soll, ein eingeschränkter Farbbereich oder Farbraum ausreicht, um ein natürliches Erscheinungsbild der Dentalrestauration zu erreichen. Es wurde also erkannt, dass es für die Herstellung einer naturgetreuen Dentalrestauration nicht nötig ist, eine beliebige Farbe und somit eine beliebige Farbverteilung einstellen zu können, sondern dass es ausreicht, die Dentalrestauration in gängigen Farben mit darauf basierenden Farbmischungen herstellen zu können. Für den Fall, dass es sich beim Material der ersten Materialart um ein Zahnersatzmaterial handelt, betreffen die gängigen Farben gängige Zahnfarben, die als Abstufungen von beige beschrieben werden können. Für den Fall, dass es sich beim Material der ersten Materialart um ein Zahnfleischersatzmaterial handelt, betreffen die gängigen Farben gängige Zahnfleischfarben, die als Abstufungen von rosa oder rot beschrieben werden können. Es wurde herausgefunden, dass sich die gängigen Zahnfarben oder Zahnfleischfarben und die zugehörigen Farbmischungen durch entsprechendes Mischen eines Ausgangsmaterials mit einer ersten Farbe und eines Ausgangsmaterials mit einer zweiten Farbe naturgetreu nachbilden lassen.

In Bezug auf die Farbhelligkeit und die Farbhelligkeitsverteilungen liegt der vorliegenden Erfindung die Erkenntnis zugrunde, dass trotz der Tatsache, dass natürliche Zähne und natürliches Zahnfleisch eine ungleichmäßige Farbhelligkeitsverteilung, d. h. wenigstens zwei Abschnitte unterschiedlicher Farbhelligkeit, aufweisen, die in einer Dentalrestauration nachempfunden werden soll, ein eingeschränkter Farbhelligkeitsbereich ausreicht, um ein naturgetreues Erscheinungsbild der Dentalrestauration zu erreichen. Es wurde also erkannt, dass es für die Herstellung einer naturgetreuen Dentalrestauration nicht nötig ist, eine beliebige Farbhelligkeit und somit eine beliebige Farbhelligkeitsverteilung einstellen zu können, sondern dass es ausreicht, die Dentalrestauration in gängigen Farbhelligkeiten und darauf basierenden Farbhelligkeitsabstufungen herstellen zu können. Für den Fall, dass es sich beim Material der ersten Materialart um ein Zahnersatzmaterial handelt, betreffen die gängigen Farbhelligkeiten gängige Zahnfarbhelligkeiten. Für den Fall, dass es sich bei Material der ersten Materialart um ein Zahnfleischersatzmaterial handelt, betreffen die gängigen Farbhelligkeiten gängige Zahnfleischfarbhelligkeiten. Es wurde herausgefunden, dass sich die gängigen Zahnfarbhelligkeiten oder Zahnfleischfarbhelligkeiten und die zugehörigen Farbhelligkeitsabstufungen durch entsprechendes Mischen eines ersten Ausgangsmaterials mit einer ersten Farbhelligkeit und eines zweiten Ausgangsmaterials mit einer zweiten Farbhelligkeit naturgetreu nachbilden lassen.

Die Einfachheit des erfindungsgemäßen Verfahrens, das lediglich ein erstes Ausgangsmaterial, ein zweites Ausgangsmaterial und ein drittes Ausgangsmaterial nutzt, wird insbesondere im Vergleich zu einem Verfahren deutlich, bei dem ein größerer Farbraum oder Farbbereich und ein größerer Farbhelligkeitsbereich verwendet werden. In diesem Zusammenhang kann beispielsweise eine Abwandlung des CMYK- Farbmodells verwendet werden, das bereits weiter oben erläutert wurde. Soll basierend auf diesem Farbmodell mittels einer Anordnung von Volumensegmenten eine Dentalrestauration hergestellt werden, ist zusätzlich ein weißes Material notwendig. Darüber hinaus kann das CMYK-Farbmodell dadurch vereinfacht werden, dass schwarz mittels Cyan (C), Magenta (M) und yellow (Y) gemischt wird. Für die Herstellung einer Dentalrestauration benötigt man somit wenigstens vier Ausgangsmaterialien, wobei ein erstes Ausgangsmaterial die Farbe Cyan aufweist, ein zweites Ausgangsmaterial die Farbe Magenta aufweist, ein drittes Ausgangsmaterial die Farbe yellow aufweist, und ein viertes Ausgangsmaterial weiß (anstelle von key/schwarz) ist. Verglichen mit dem erfindungsgemäßen Verfahren werden somit anstelle von lediglich zwei Ausgangsmaterialien insgesamt wenigstens vier Ausgangsmaterialien benötigt.

Es versteht sich, dass gemäß einer Option das erfindungsgemäße Verfahren neben dem ersten Ausgangsmaterial und dem zweiten Ausgangsmaterial ein Stützmaterial nutzt. Das Stützmaterial kann dazu verwendet werden, überhängende oder auskragende Abschnitte der Dentalrestauration herzustellen.

Weiter versteht es sich, dass die Bezeichnung der Ausgangsmaterialien, der Farben, der Farbhelligkeiten und der Opazitäten mittels Zahlworten lediglich der einfachen Erläuterung dient. Anzahlen oder Mengen sind dadurch nicht impliziert.

Weiter versteht es sich, dass in einem Fall in dem die Dentalrestauration ausschließlich aus einem Material der ersten Materialart hergestellt ist, der Bereich der Dentalrestauration aus dem Material der ersten Materialart gleichbedeutend mit der gesamten Dentalrestauration ist.

Erfindungsgemäß weist der Bereich der Dentalrestauration aus dem Material der ersten Materialart zusätzlich wenigstens zwei Abschnitte unterschiedlicher Opazität auf. Das Verfahren umfasst ferner:
- Bereitstellen eines dritten Ausgangsmaterials der ersten Materialart, wobei das dritte Ausgangsmaterial eine dritte Farbe, eine dritte Farbhelligkeit und eine dritte Opazität aufweist,
- Aufbauen des Bereichs der Dentalrestauration aus dem Material der ersten Materialart durch räumliches Anordnen einer Mehrzahl von Volumensegmenten, wobei jedes Volumensegment ausschließlich aus einem oder mehreren ausgewählt aus erstem Ausgangsmaterial, zweitem Ausgangsmaterial und drittem Ausgangsmaterial gebildet ist.

Es kommt also ein drittes Ausgangsmaterial hinzu. Dementsprechend kann jedes Volumensegment ausschließlich aus einem oder mehreren ausgewählt aus erstem Ausgangsmaterial, zweitem Ausgangsmaterial und drittem Ausgangsmaterial gebildet sein. Das schließt sieben Alternativen ein. Gemäß einer ersten Alternative ist ein Volumensegment ausschließlich aus dem ersten Ausgangsmaterial gebildet. Gemäß einer zweiten Alternative ist ein Volumensegment ausschließlich aus dem zweiten Ausgangsmaterial gebildet. Gemäß einer dritten Alternative ist ein Volumensegment ausschließlich aus dem dritten Ausgangsmaterial gebildet. Gemäß einer vierten Alternative ist ein Volumensegment ausschließlich aus dem ersten Ausgangsmaterial und dem zweiten Ausgangsmaterial gebildet. Gemäß einer fünften Alternative ist ein Volumensegment ausschließlich aus dem ersten Ausgangsmaterial und dem dritten Ausgangsmaterial gebildet. Gemäß einer sechsten Alternative ist ein Volumensegment ausschließlich aus dem zweiten Ausgangsmaterial und dem dritten Ausgangsmaterial gebildet. Gemäß einer siebten Alternative ist ein Volumensegment ausschließlich aus dem ersten Ausgangsmaterial, aus dem zweiten Ausgangsmaterial und dem dritten Ausgangsmaterial gebildet. In denjenigen Alternativen, in denen das Volumensegment aus mehr als einem Ausgangsmaterial gebildet ist, kann auch davon gesprochen werden, dass das Volumensegment ausschließlich aus einer Mischung aus mehreren Ausgangsmaterialien ausgewählt aus dem ersten Ausgangsmaterial, dem zweiten Ausgangsmaterial und dem dritten Ausgangsmaterial gebildet ist. Die Tatsache, dass die Dentalrestauration wenigstens zwei Abschnitte unterschiedlicher Farbe, wenigstens zwei Abschnitte unterschiedlicher Farbhelligkeit und wenigstens zwei Abschnitte unterschiedlicher Opazität aufweist, verleiht der Dentalrestauration ein besonders naturgetreues Erscheinungsbild. Dabei versteht es sich, dass Abschnitte unterschiedlicher Farbe, Abschnitte unterschiedlicher Farbhelligkeit und Abschnitte unterschiedlicher Opazität separat voneinander sein können, teilweise überlappen können oder vollständig überlappen können. Wie gehabt, können die erste Farbe, die zweite Farbe und die dritte Farbe grundsätzlich gleich oder unterschiedlich sein. Ebenso können die erste Farbhelligkeit, die zweite Farbhelligkeit und die dritte Farbhelligkeit grundsätzlich gleich oder unterschiedlich sein. Darüber hinaus können die erste Opazität, die zweite Opazität und die dritte Opazität grundsätzlich gleich oder unterschiedlich sein. Das gilt natürlich stets unter der Prämisse, dass der Bereich der Dentalrestauration aus dem Material der ersten Materialart wenigstens zwei Abschnitte unterschiedlicher Farbe, wenigstens zwei Abschnitte unterschiedlicher Farbhelligkeit und wenigstens zwei Abschnitte unterschiedlicher Opazität aufweist. Das naturgetreue Erscheinungsbild kann unter Verwendung lediglich dreier Ausgangsmaterialien, d. h. des ersten Ausgangsmaterials, des zweiten Ausgangsmaterials und des dritten Ausgangsmaterials, erreicht werden. Weitere Ausgangsmaterialien werden nicht benötigt und nicht verwendet. Das Verfahren ist also vergleichsweise einfach. Nachdem im vorliegenden Beispiel insgesamt lediglich drei Ausgangsmaterialien verwendet werden, lassen sich auf einfache und zuverlässige Weise innerhalb gewisser Grenzen eine Farbe, eine Farbhelligkeit und eine Opazität der Dentalrestauration lokal einstellen. Es können somit verschiedene Subvolumina der Dentalrestauration verschiedene Farben, verschiedene Farbhelligkeiten und verschiedene Opazitäten aufweisen. Je ein Subvolumen kann beispielsweise einer Zahnschneide, einem Dentinkern und einem Zahnhals zugeordnet sein.

Dem liegt die Erkenntnis zugrunde, dass trotz der Tatsache, dass natürliche Zähne und natürliches Zahnfleisch eine ungleichmäßige Opazitätsverteilung, d. h. wenigstens zwei Abschnitte unterschiedlicher Opazität, aufweisen, der in einer Dentalrestauration nachempfunden werden soll, ein eingeschränkter Opazitätsbereich, z. B. zwischen 40% und 95%, ausreicht, um ein natürliches Erscheinungsbild der Dentalrestauration zu erreichen. Es wurde also erkannt, dass es für die Herstellung einer naturgetreuen Dentalrestauration nicht nötig ist, eine beliebige Opazität und somit eine beliebige Opazitätsverteilung einstellen zu können, sondern dass es ausreicht, die Dentalrestauration in gängigen Opazitäten und einem darauf basierenden Opazitätsbereich herstellen zu können. Es wurde herausgefunden, dass sich die gängigen Opazitäten durch entsprechendes Mischen von wenigstens einem Ausgangsmaterial mit einer ersten Opazität und einem Ausgangsmaterial mit einer zweiten Opazität naturgetreu nachbilden lassen.

Der vorliegende Aspekt der Erfindung wird anhand der Opazität erläutert. Es versteht sich jedoch, dass in gleicher Weise das Beispiel auch anhand der Transluzenz erläutert werden könnte. Die Opazität und die Transluzenz können ineinander umgerechnet werden.

Erfindungsgemäß können zwei Farben ausgewählt aus erster Farbe, zweiter Farbe und dritter Farbe gleich sein. Alternativ oder zusätzlich können zwei Farben ausgewählt aus erster Farbe, zweiter Farbe und dritter Farbe unterschiedlich sein. Gemäß der ersten Alternative sind also zwei Farben aus erster Farbe, zweiter Farbe und dritter Farbe gleich, wobei die jeweils übrigbleibende Farbe demgegenüber unterschiedlich ist. Gemäß der zweiten Alternative sind zwei Farben aus erster Farbe, zweiter Farbe und dritter Farbe unterschiedlich. Dementsprechend ist die jeweils übrigbleibende Farbe gleich einer der unterschiedlichen Farben. In einem Beispiel sind die erste Farbe und die zweite Farbe gleich und die dritte Farbe ist demgegenüber unterschiedlich. In einem anderen Beispiel sind die erste Farbe und die dritte Farbe gleich und die zweite Farbe demgegenüber unterschiedlich. In einem weiteren Beispiel sind die zweite Farbe und die dritte Farbe gleich und die erste Farbe demgegenüber unterschiedlich. Wenn zwei Farben ausgewählt aus erster Farbe, zweiter Farbe und dritter Farbe gezielt gleich oder unterschiedlich sind, vereinfacht sich das Verfahren weiter. Das liegt daran, dass zum Herstellen eines Abschnitts der Dentalrestauration mit einer bestimmten Farbe gezielt diejenigen beiden Farben aus erster Farbe, zweiter Farbe und dritter Farbe gemischt werden können, die unterschiedlich sind. Eine Mischung derjenigen beiden Farben aus erster Farbe, zweiter Farbe und dritter Farbe, die gleich sind, bewirkt keine Veränderung der Farbe. Die jeweils zugehörigen Ausgangsmaterialien können also zum Einstellen anderer Charakteristika, z. B. der Farbhelligkeit oder der Opazität, verwendet werden, die somit unabhängig von der Farbe der Dentalrestauration eingestellt werden können.

Erfindungsgemäß können zwei Farbhelligkeiten ausgewählt aus erster Farbhelligkeit, zweiter Farbhelligkeit und dritter Farbhelligkeit gleich sein. Alternativ oder zusätzlich können zwei Farbhelligkeiten ausgewählt aus erster Farbhelligkeit, zweiter Farbhelligkeit und dritter Farbhelligkeit unterschiedlich sein. Gemäß der ersten Alternative sind also zwei Farbhelligkeiten aus erster Farbhelligkeit, zweiter Farbhelligkeit und dritter Farbhelligkeit gleich, wobei die jeweils übrigbleibende Farbhelligkeit demgegenüber unterschiedlich ist. Gemäß der zweiten Alternative sind zwei Farbhelligkeiten aus erster Farbhelligkeit, zweiter Farbhelligkeit und dritter Farbhelligkeit unterschiedlich. Dementsprechend ist die jeweils übrigbleibende Farbhelligkeit gleich einer der unterschiedlichen Farbhelligkeiten. In einem Beispiel sind die erste Farbhelligkeit und die zweite Farbhelligkeit gleich und die dritte Farbhelligkeit ist demgegenüber unterschiedlich. In einem anderen Beispiel sind die erste Farbhelligkeit und die dritte Farbhelligkeit gleich und die zweite Farbhelligkeit demgegenüber unterschiedlich. In einem weiteren Beispiel sind die zweite Farbhelligkeit und die dritte Farbhelligkeit gleich und die erste Farbhelligkeit demgegenüber unterschiedlich. Wenn zwei Farbhelligkeiten ausgewählt aus erster Farbhelligkeit, zweiter Farbhelligkeit und dritter Farbhelligkeit gezielt gleich oder unterschiedlich sind, vereinfacht sich das Verfahren weiter. Das liegt daran, dass zum Herstellen eines Abschnitts der Dentalrestauration mit einer bestimmten Farbhelligkeit gezielt diejenigen beiden Farbhelligkeiten aus erster Farbhelligkeit, zweiter Farbhelligkeit und dritter Farbhelligkeit gemischt werden können, die unterschiedlich sind. Eine Mischung derjenigen beiden Farbhelligkeiten aus erster Farbhelligkeit, zweiter Farbhelligkeit und dritter Farbhelligkeit, die gleich sind, bewirkt keine Veränderung der Farbhelligkeit. Jeweils zugehörigen Ausgangsmaterialien können also zum Einstellen anderer Charakteristika, z. B. der Farbe oder der Opazität, verwendet werden, die somit unabhängig von der Farbhelligkeit der Dentalrestauration eingestellt werden können.

Erfindungsgemäß können zwei Opazitäten ausgewählt aus erster Opazität, zweiter Opazität und dritter Opazität gleich sein. Alternativ oder zusätzlich können zwei Opazitäten ausgewählt aus erster Opazität, zweiter Opazität und dritter Opazität unterschiedlich sein. Gemäß der ersten Alternative sind also zwei Opazitäten aus erster Opazität, zweiter Opazität und dritter Opazität gleich, wobei die jeweils übrigbleibende Opazität demgegenüber unterschiedlich ist. Gemäß der zweiten Alternative sind zwei Opazitäten aus erster Opazität, zweiter Opazität und dritter Opazität unterschiedlich. Dementsprechend ist die jeweils übrigbleibende Opazität gleich einer der unterschiedlichen Opazitäten. In einem Beispiel sind die erste Opazität und die zweite Opazität gleich und die dritte Opazität ist demgegenüber unterschiedlich. In einem anderen Beispiel sind die erste Opazität und die dritte Opazität gleich und die zweite Opazität demgegenüber unterschiedlich. In einem weiteren Beispiel sind die zweite Opazität und die dritte Opazität gleich und die erste Opazität demgegenüber unterschiedlich. Wenn zwei Opazitäten ausgewählt aus erster Opazität, zweiter Opazität und dritter Opazität gezielt gleich oder unterschiedlich sind, vereinfacht sich das Verfahren weiter. Das liegt daran, dass zum Herstellen eines Abschnitts der Dentalrestauration mit einer bestimmten Opazität gezielt diejenigen beiden aus erster Opazität, zweiter Opazität und dritter Opazität gemischt werden können, die unterschiedlich sind. Eine Mischung derjenigen beiden Opazitäten aus erster Opazität, zweiter Opazität und dritter Opazität, die gleich sind, bewirkt keine Veränderung der Opazität. Jeweils zugehörige Ausgangsmaterialien können also zum Einstellen anderer Charakteristika, z. B. der Farbe oder der Farbhelligkeit, verwendet werden, die somit unabhängig von der Farbhelligkeit der Dentalrestauration eingestellt werden können.

Erfindungsgemäß sind die erste Farbe und die zweite Farbe unterschiedlich, die dritte Farbe und die erste Farbe gleich, die erste Farbhelligkeit und die zweite Farbhelligkeit unterschiedlich, die dritte Farbhelligkeit und die erste Farbhelligkeit gleich, die erste Opazität und die zweite Opazität gleich, und die erste Opazität und die dritte Opazität unterschiedlich. Es lässt sich also durch gezieltes Mischen des ersten Ausgangsmaterials und des zweiten Ausgangsmaterials gezielt eine Farbe der Dentalrestauration einstellen. Das kann lokal erfolgen, d. h. an unterschiedlichen Stellen der Dentalrestauration können das erste Ausgangsmaterial und das zweite Ausgangsmaterial in unterschiedlichen Verhältnissen gemischt werden, sodass sich an diesen Stellen unterschiedliche Farben der Dentalrestauration ergeben. Ebenso lässt sich durch gezieltes Mischen des ersten Ausgangsmaterials und des zweiten Ausgangsmaterials gezielt eine Farbhelligkeit der Dentalrestauration einstellen. Das kann wieder lokal erfolgen, d. h. an unterschiedlichen Stellen der Dentalrestauration können das erste Ausgangsmaterial und das zweite Ausgangsmaterial in unterschiedlichen Verhältnissen gemischt werden, sodass sich an diesen Stellen unterschiedliche Farbhelligkeiten der Dentalrestauration ergeben. Das erste Ausgangsmaterial und das zweite Ausgangsmaterial unterscheiden sich dabei lediglich hinsichtlich der Opazität. Folglich lässt sich durch gezieltes Mischen des ersten Ausgangsmaterials und des dritten Ausgangsmaterials gezielt eine Opazität der Dentalrestauration einstellen. Das kann wieder lokal erfolgen, d. h. an unterschiedlichen Stellen der Dentalrestauration können das erste Ausgangsmaterial und das dritte Ausgangsmaterial in unterschiedlichen Verhältnissen gemischt werden, sodass sich an diesen Stellen unterschiedliche Opazitäten der Dentalrestauration ergeben. Es versteht sich, dass sich durch ein gezieltes Mischungsverhältnis des ersten Ausgangsmaterials und des zweiten Ausgangsmaterials sowie durch ein gezieltes Mischungsverhältnis des ersten Ausgangsmaterials und des dritten Ausgangsmaterials auch ein festes Mischungsverhältnis zwischen zweitem Ausgangsmaterial und drittem Ausgangsmaterial ergibt. Insgesamt lässt sich also bei der Dentalrestauration lokal sowohl eine Farbe, als auch eine Farbhelligkeit, als auch eine Opazität gezielt einstellen. Auf diese Weise erhält die Dentalrestauration ein naturgetreues Erscheinungsbild.

In einem Beispiel, in dem die erste Opazität und die zweite Opazität gleich sind und die dritte Opazität demgegenüber unterschiedlich ist, können die erste Opazität und die zweite Opazität höher seien als die dritte Opazität. Das ist vorteilhaft, wenn eine herzustellende Dentalrestauration überwiegend eine hohe Opazitätaufweist. Das ist beispielsweise der Fall bei einem Dentinkern einer Dentralrestauration, die ein Ersatzzahn ist. Lokal unterschiedliche Opazitäten können somit dadurch eingestellt werden, das auf Basis der ersten und zweiten Opazität, die vergleichsweise hoch ist, lokal die Opazität durch Beimischen des dritten Ausgangsmaterials mit der dritten, niedrigeren Opazität verringert, d. h. die Transluzenz erhöht, wird. Das ist beispielsweise für eine Schneide eines Ersatzzahns vorteilhaft.

In einem anderen Beispiel, in dem die erste Opazität und die zweite Opazität gleich sind und die dritte Opazität demgegenüber unterschiedlich ist, können die erste Opazität und die zweite Opazität niedriger seien als die dritte Opazität. Das ist vorteilhaft, wenn eine herzustellende Dentalrestauration überwiegend eine niedrige Opazität aufweist. Das ist beispielsweise der Fall bei einer Prothesenbasis, die Zahnfleisch nachahmt. Lokal unterschiedliche Opazitäten können somit dadurch eingestellt werden, das auf Basis der ersten und zweiten Opazität, die vergleichsweise niedrig ist, lokal die Opazität durch Beimischen des dritten Ausgangsmaterials mit der dritten, höheren Opazität erhöht, d. h. die Transluzenz verringert wird. Das ist beispielsweise vorteilhaft, um Äderchen in der Prothesenbasis nachzuahmen.

Die Dentalrestauration kann zusätzlich ein Material einer zweiten Materialart umfassen. Dabei weist ein Bereich der Dentalrestauration aus dem Material der zweiten Materialart wenigstens zwei Abschnitte unterschiedlicher Farbe und wenigstens zwei Abschnitte unterschiedlicher Farbhelligkeit auf. Das Verfahren umfasst dann ferner:
- Bereitstellen eines vierten Ausgangsmaterials der zweiten Materialart, wobei das vierte Ausgangsmaterial eine vierte Farbe, eine vierte Farbhelligkeit und eine vierte Opazität aufweist,
- Bereitstellen eines fünften Ausgangsmaterials der zweiten Materialart, wobei das fünfte Ausgangsmaterial eine fünfte Farbe, eine fünfte Farbhelligkeit, und eine fünfte Opazität aufweist,
- Aufbauen des Bereichs der Dentalrestauration aus dem Material der zweiten Materialart durch räumliches Anordnen einer Mehrzahl von Volumensegmenten, wobei jedes Volumensegment ausschließlich aus einem oder mehreren ausgewählt aus viertem Ausgangsmaterial und fünftem Ausgangsmaterial gebildet ist.

Die herzustellende Dentalrestauration umfasst also ein Material der ersten Materialart und ein Material der zweiten Materialart. In diesem Zusammenhang kann das Material der ersten Materialart ein Zahnersatzmaterial sein und das Material der zweiten Materialart ein Zahnfleischersatzmaterial. Der umgekehrte Fall ist ebenfalls möglich. Auch der Bereich der Dentalrestauration aus dem Material der zweiten Materialart wird durch räumliches Anordnen einer Mehrzahl von Volumensegmenten gebildet. Dabei wird unter einem Volumensegment der Dentalrestauration wieder ein Volumensegment verstanden, das im Vergleich zur Außenabmessungen der Dentalrestauration sehr klein ist. Damit ist das Volumensegment auch im Vergleich zu gegebenenfalls nachzubildenden Makro-Abschnitten der Dentalrestauration wie Zahnschneide, Dentinkern, Zahnhals oder Zahnfleischbasis sehr klein. Das Volumensegment kann auch als Voxel bezeichnet werden. Die Tatsache, dass jedes Volumensegment ausschließlich aus einem oder mehreren ausgewählt aus viertem Ausgangsmaterial und fünftem Ausgangsmaterial gebildet ist, schließt dabei drei Alternativen ein. Gemäß einer ersten Alternative ist ein Volumensegment ausschließlich aus dem vierten Ausgangsmaterial gebildet. Gemäß einer zweiten Alternative ist ein Volumensegment ausschließlich aus dem fünften Ausgangsmaterial gebildet. Gemäß einer dritten Alternative ist ein Volumensegment ausschließlich aus dem vierten Ausgangsmaterial und dem fünften Ausgangsmaterial gebildet. In der dritten Alternative kann auch davon gesprochen werden, dass das Volumensegment ausschließlich aus einer Mischung des vierten Ausgangsmaterials und des fünften Ausgangsmaterials gebildet ist. Die Tatsache, dass auch der Bereich der Dentalrestauration aus dem Material der zweiten Materialart wenigstens zwei Abschnitte unterschiedlicher Farbe und wenigstens zwei Abschnitte unterschiedlicher Farbhelligkeit aufweist, verleiht diesem Bereich der Dentalrestauration ein naturgetreues Erscheinungsbild. Es versteht sich, dass dabei Abschnitte unterschiedlicher Farbe und Abschnitte unterschiedlicher Farbhelligkeit separat voneinander sein können, teilweise überlappen können oder vollständig überlappen können. Das kann unter Verwendung lediglich zweier Ausgangsmaterialien, d. h. des vierten Ausgangsmaterials und des fünften Ausgangsmaterials erreicht werden. Weitere Ausgangsmaterialien werden nicht benötigt und nicht verwendet. Aus diesem Grund ist das Verfahren vergleichsweise einfach. Insgesamt lässt sich somit eine Dentalrestauration herstellen, die wenigstens einen Bereich aus dem Material der ersten Materialart und wenigstens einen Bereich aus dem Material der zweiten Materialart aufweist, wobei sowohl der Bereich aus dem Material der ersten Materialart als auch der Bereich aus dem Material der zweiten Materialart wenigstens zwei Abschnitte unterschiedlicher Farbe und wenigstens zwei Abschnitte unterschiedlicher Farbhelligkeit aufweist. Somit lassen sich mittels des erfindungsgemäßen Verfahrens naturgetreue Dentalrestaurationen aufwandsarm herstellen.

Dabei können die vierte Farbe und die fünfte Farbe grundsätzlich gleich oder unterschiedlich sein. Dabei können die vierte Farbe und die fünfte Farbe zum Beispiel durch ein Farbmodell oder eine Farblehre beschrieben werden. In diesem Zusammenhang können die vierte Farbe und die fünfte Farbe in einem RGB-Farbraum, also einem durch die Farben Rot (R), Grün (G) und Blau (B) definierten Farbraum beschrieben werden. Alternativ können die vierte Farbe und die fünfte Farbe in einem CMYK-Farbraum, also einem Farbraum der durch eine blaue Farbe (Cyan - C), eine rote Farbe (Magenta - M), eine gelbe Farbe (Yellow - Y) und schwarz (Key - K) definiert ist, beschrieben werden. Wie bereits erwähnt, kann ein Farbraum allgemeiner auch als Farbbereich bezeichnet werden. Dabei kann ein Farbbereich eine oder mehrere Dimensionen aufweisen. Auch ist es möglich, die vierte Farbe und die fünfte Farbe in einem Farbspektrum, d. h. über eine zugehörige optische Wellenlänge oder Frequenz, zu definieren. Ferner ist es möglich, die vierte Farbe und die fünfte Farbe über ein Lab-Farbmodell, d. h. über einen Helligkeitswert (L-Wert), einen a-Farbwert entlang einer Achse, die durch die Farben grün und rot definiert ist, und einen b-Farbwert entlang einer Achse, die durch die Farben gelb und blau definiert ist, beschreiben. In einer bevorzugten Ausführungsform sind die vierte Farbe und die fünfte Farbe unterschiedlich. Die Dentalrestauration, genauer gesagt der Bereich der Dentalrestauration aus dem Material der zweiten Materialart, kann also zumindest abschnittsweise die vierte Farbe oder die fünfte Farbe oder eine aus vierter Farbe und fünfter Farbe generierte Mischfarbe aufweisen. Mit anderen Worten kann die Dentalrestauration, genauer gesagt der Bereich der Dentalrestauration aus dem Material der zweiten Materialart, jede Farbe aufweisen, die innerhalb eines durch die vierte Farbe und fünfte Farbe definierten Farbbereichs liegt. Die Dentalrestauration kann also jede Farbe aufweisen, die durch eine Mischung der vierten Farbe und der fünften Farbe erstellt werden kann.

Auch die vierte Farbhelligkeit und die fünfte Farbhelligkeit können grundsätzlich gleich oder unterschiedlich sein. In einer bevorzugten Ausführungsform sind die vierte Farbhelligkeit und die fünfte Farbhelligkeit unterschiedlich. Die Dentalrestauration, genauer gesagt der Bereich der Dentalrestauration aus dem Material der zweiten Materialart, kann also zumindest abschnittsweise die vierte Farbhelligkeit oder die fünfte Farbhelligkeit oder eine aus vierter Farbhelligkeit und fünfter Farbhelligkeit generierte Mischfarbhelligkeit aufweisen. Mit anderen Worten kann die Dentalrestauration, genauer gesagt der Bereich der Dentalrestauration aus dem Material der zweiten Materialart, jede Farbhelligkeit aufweisen, die innerhalb eines durch die vierte Farbhelligkeit und die fünfte Farbhelligkeit definierten Farbhelligkeitsbereichs liegt.

Ebenso können die vierte Opazität und die fünfte Opazität grundsätzlich gleich oder unterschiedlich sein. Wenn die vierte Opazität und die fünfte Opazität gleich sind, lassen sich die Farbe und die Farbhelligkeit durch Mischen des vierten Ausgangsmaterials und des fünften Ausgangsmaterials einstellen, wobei die Opazität gleichbleibt. In einem Fall, in dem die vierte Opazität und die fünfte Opazität unterschiedlich sind, lässt sich die Opazität der Dentalrestauration, genauer gesagt die Opazität des Bereichs der Dentalrestauration aus dem Material der zweiten Materialart, durch Mischen des vierten Ausgangsmaterials und des fünften Ausgangsmaterials einstellen. Mit anderen Worten kann die Dentalrestauration, genauer gesagt der Bereich der Dentalrestauration aus dem Material der zweiten Materialart, jede Opazität aufweisen, die innerhalb eines durch die vierte Opazität und die fünfte Opazität definierten Opazitätsbereichs liegt.

Gemäß einer Variante weist der Bereich der Dentalrestauration aus dem Material der zweiten Materialart zusätzlich wenigstens zwei Abschnitte unterschiedlicher Opazität auf. Das Verfahren umfasst dann ferner:
- Bereitstellen eines sechsten Ausgangsmaterials der zweiten Materialart, wobei das sechste Ausgangsmaterial eine sechste Farbe, eine sechste Farbhelligkeit und eine sechste Opazität aufweist,
- Aufbauen des Bereichs der Dentalrestauration aus dem Material der zweiten Materialart durch räumliches Anordnen einer Mehrzahl von Volumensegmenten, wobei jedes Volumensegment ausschließlich aus einem oder mehreren ausgewählt aus viertem Ausgangsmaterial, fünftem Ausgangsmaterial und sechstem Ausgangsmaterial gebildet ist.

In diesem Ausführungsbeispiel kommt also zum Aufbau des Bereichs aus dem Material der zweiten Materialart ein sechstes Ausgangsmaterial hinzu. Dementsprechend kann jedes Volumensegment ausschließlich aus einem oder mehreren ausgewählt aus viertem Ausgangsmaterial, fünftem Ausgangsmaterial und sechstem Ausgangsmaterial gebildet sein. Das schließt sieben Alternativen ein. Gemäß einer ersten Alternative ist ein Volumensegment ausschließlich aus dem vierten Ausgangsmaterial gebildet. Gemäß einer zweiten Alternative ist ein Volumensegment ausschließlich aus dem fünften Ausgangsmaterial gebildet. Gemäß einer dritten Alternative ist ein Volumensegment ausschließlich aus dem sechsten Ausgangsmaterial gebildet. Gemäß einer vierten Alternative ist ein Volumensegment ausschließlich aus dem vierten Ausgangsmaterial und dem fünften Ausgangsmaterial gebildet. Gemäß einer fünften Alternative ist ein Volumensegment ausschließlich aus dem vierten Ausgangsmaterial und dem sechsten Ausgangsmaterial gebildet. Gemäß einer sechsten Alternative ist ein Volumensegment ausschließlich aus dem fünften Ausgangsmaterial und aus dem sechsten Ausgangsmaterial gebildet. Gemäß einer siebten Alternative ist ein Volumensegment ausschließlich aus dem vierten Ausgangsmaterial, aus dem fünften Ausgangsmaterial und dem sechsten Ausgangsmaterial gebildet. In denjenigen Alternativen, in denen das Volumensegment aus mehr als einem Ausgangsmaterial gebildet ist, kann auch davon gesprochen werden, dass das Volumensegment ausschließlich aus einer Mischung aus mehreren ausgewählt aus dem vierten Ausgangsmaterials, dem fünften Ausgangsmaterial und dem sechsten Ausgangsmaterial gebildet ist. Die Tatsache, dass die Dentalrestauration, genauer gesagt der Bereich der Dentalrestauration aus dem Material der zweiten Materialart, wenigstens zwei Abschnitte unterschiedlicher Farbe, wenigstens zwei Abschnitte unterschiedlicher Farbhelligkeit und wenigstens zwei Abschnitte unterschiedlicher Opazität aufweist, verleiht der Dentalrestauration ein besonders naturgetreues Erscheinungsbild. Dabei versteht es sich, dass Abschnitte unterschiedlicher Farbe, Abschnitte unterschiedlicher Farbhelligkeit und Abschnitte unterschiedlicher Opazität separat voneinander sein können, teilweise überlappen können oder vollständig überlappen können. Wie gehabt, können die vierte Farbe, die fünfte Farbe und die sechste Farbe grundsätzlich gleich oder unterschiedlich sein. Ebenso können die vierte Farbhelligkeit, die fünfte Farbhelligkeit und die sechste Farbhelligkeit grundsätzlich gleich oder unterschiedlich sein. Darüber hinaus können die vierte Opazität, die fünfte Opazität und die sechste Opazität grundsätzlich gleich oder unterschiedlich sein. Das naturgetreue Erscheinungsbild kann unter Verwendung lediglich dreier Ausgangsmaterialien für den Bereich aus dem Material der zweiten Materialart, d. h. des vierten Ausgangsmaterials, des fünften Ausgangsmaterials und des sechsten Ausgangsmaterials, erreicht werden. Weitere Ausgangsmaterialien werden nicht benötigt und nicht verwendet. Das Verfahren ist also vergleichsweise einfach. Nachdem im vorliegenden Beispiel für den Bereich der Dentalrestauration aus dem Material der zweiten Materialart lediglich drei Ausgansmaterialien und für die Dentalrestauration insgesamt lediglich sechs Ausgangsmaterialien verwendet werden, lassen sich auf einfache und zuverlässige Weise innerhalb gewisser Grenzen eine Farbe, eine Farbhelligkeit und eine Opazität der Dentalrestauration für den Bereich aus dem Material der ersten Materialart und für den Bereich aus dem Material der zweiten Materialart lokal einstellen.

Wie bisher versteht es sich, dass das vorliegende Beispiel zwar anhand der Opazität erläutert wird, in gleicher Weise das Beispiel jedoch auch anhand der Transluzenz erläutert werden könnte. Die Opazität und die Transluzenz können ineinander umgerechnet werden.

Dabei können zwei Farben ausgewählt aus vierter Farbe, fünfter Farbe und sechster Farbe gleich sein. Alternativ oder zusätzlich können zwei Farben ausgewählt aus vierter Farbe, fünfter Farbe und sechster Farbe unterschiedlich sein. Gemäß der ersten Alternative sind also zwei aus vierter Farbe, fünfter Farbe und sechster Farbe gleich, wobei die jeweils übrigbleibende Farbe demgegenüber unterschiedlich ist. Gemäß der zweiten Alternative sind zwei Farben aus vierter Farbe, fünfter Farbe und sechster Farbe unterschiedlich. Dementsprechend ist die jeweils übrigbleibende Farbe gleich einer der unterschiedlichen Farben. In einem Beispiel sind die vierte Farbe und die fünfte Farbe gleich und die sechste Farbe ist demgegenüber unterschiedlich. In einem anderen Beispiel sind die vierte Farbe und die sechste Farbe gleich und die fünfte Farbe demgegenüber unterschiedlich. In einem weiteren Beispiel sind die fünfte Farbe und die sechste Farbe gleich und die vierte Farbe demgegenüber unterschiedlich. Wenn zwei Farben ausgewählt aus vierter Farbe, fünfter Farbe und sechster Farbe gezielt gleich oder unterschiedlich sind, vereinfacht sich das Verfahren weiter. Das liegt daran, dass zum Herstellen eines Abschnitts der Dentalrestauration mit einer bestimmten Farbe gezielt diejenigen beiden Farben aus vierter Farbe, fünfter Farbe und sechster Farbe gemischt werden können, die unterschiedlich sind. Eine Mischung derjenigen beiden Farben aus vierter Farbe, fünfter Farbe und sechster Farbe, die gleich sind, bewirkt keine Veränderung der Farbe. Die jeweils zugehörigen Ausgangsmaterialien können also zum Einstellen anderer Charakteristika, z. B. der Farbhelligkeit oder der Opazität, verwendet werden, die somit unabhängig von der Farbe der Dentalrestauration eingestellt werden können.

Ferner können zwei Farbhelligkeiten ausgewählt aus vierter Farbhelligkeit, fünfter Farbhelligkeit und sechster Farbhelligkeit gleich sein. Alternativ oder zusätzlich können zwei Farbhelligkeiten ausgewählt aus vierter Farbhelligkeit, fünfter Farbhelligkeit und sechster Farbhelligkeit unterschiedlich sein. Gemäß der ersten Alternative sind also zwei Farbhelligkeiten aus vierter Farbhelligkeit, fünfter Farbhelligkeit und sechster Farbhelligkeit gleich, wobei die jeweils übrigbleibende Farbhelligkeit demgegenüber unterschiedlich ist. Gemäß der zweiten Alternative sind zwei Farbhelligkeiten aus vierter Farbhelligkeit, fünfter Farbhelligkeit und sechster Farbhelligkeit unterschiedlich. Dementsprechend ist die jeweils übrigbleibende Farbhelligkeit gleich einer der unterschiedlichen Farbhelligkeiten. In einem Beispiel sind die vierte Farbhelligkeit und die fünfte Farbhelligkeit gleich und die sechste Farbhelligkeit ist demgegenüber unterschiedlich. In einem anderen Beispiel sind die vierte Farbhelligkeit und die sechste Farbhelligkeit gleich und die fünfte Farbhelligkeit demgegenüber unterschiedlich. In einem weiteren Beispiel sind die fünfte Farbhelligkeit und die sechste Farbhelligkeit gleich und die vierte Farbhelligkeit demgegenüber unterschiedlich. Wenn zwei Farbhelligkeiten ausgewählt aus vierter Farbhelligkeit, fünfter Farbhelligkeit und sechster Farbhelligkeit gezielt gleich oder unterschiedlich sind, vereinfacht sich das Verfahren weiter. Das liegt daran, dass zum Herstellen eines Abschnitts der Dentalrestauration mit einer bestimmten Farbhelligkeit gezielt diejenigen beiden Farbhelligkeiten aus vierter Farbhelligkeit, fünfter Farbhelligkeit und sechster Farbhelligkeit gemischt werden können, die unterschiedlich sind. Eine Mischung derjenigen beiden Farbhelligkeiten aus vierter Farbhelligkeit, fünfter Farbhelligkeit und sechster Farbhelligkeit, die gleich sind, bewirkt keine Veränderung der Farbhelligkeit. Jeweils zugehörige Ausgangsmaterialien können also zum Einstellen anderer Charakteristika, z. B. der Farbe oder der Opazität, verwendet werden, die somit unabhängig von der Farbhelligkeit der Dentalrestauration eingestellt werden können.

Auch ist es möglich, dass zwei Opazitäten ausgewählt aus vierter Opazität, fünfter Opazität und sechster Opazität gleich sind. Alternativ oder zusätzlich können zwei Opazitäten ausgewählt aus vierter Opazität, fünfter Opazität und sechster Opazität unterschiedlich sein. Gemäß der ersten Alternative sind also zwei Opazitäten aus vierter Opazität, fünfter Opazität und sechster Opazität gleich, wobei die jeweils übrigbleibende Opazität demgegenüber unterschiedlich ist. Gemäß der zweiten Alternative sind zwei Opazitäten aus vierter Opazität, fünfter Opazität und sechster Opazität unterschiedlich. Dementsprechend ist die jeweils übrigbleibende Opazität gleich einer der unterschiedlichen Opazitäten. In einem Beispiel sind die vierte Opazität und die fünfte Opazität gleich und die sechste Opazität ist demgegenüber unterschiedlich. In einem anderen Beispiel sind die vierte Opazität und die sechste Opazität gleich und die fünfte Opazität demgegenüber unterschiedlich. In einem weiteren Beispiel sind die fünfte Opazität und die sechste Opazität gleich und die vierte Opazität demgegenüber unterschiedlich. Wenn zwei Opazitäten ausgewählt aus vierter Opazität, fünfter Opazität und sechster Opazität gezielt gleich oder unterschiedlich sind, vereinfacht sich das Verfahren weiter. Das liegt daran, dass zum Herstellen eines Abschnitts der Dentalrestauration mit einer bestimmten Opazität gezielt diejenigen beiden Opazitäten aus vierter Opazität, fünfter Opazität und sechster Opazität gemischt werden können, die unterschiedlich sind. Eine Mischung derjenigen beiden Opazitäten aus vierter Opazität, fünfter Opazität und sechster Opazität, die gleich sind, bewirkt keine Veränderung der Opazität. Jeweils zugehörige Ausgangsmaterialien können also zum Einstellen anderer Charakteristika, z. B. der Farbe oder der Farbhelligkeit, verwendet werden, die somit unabhängig von der Farbhelligkeit der Dentalrestauration eingestellt werden können.

Gemäß einem Ausführungsbeispiel sind die vierte Farbe und die fünfte Farbe unterschiedlich, die sechste Farbe und die fünfte Farbe gleich, die vierte Farbhelligkeit und die fünfte Farbhelligkeit unterschiedlich, die sechste Farbhelligkeit und die fünfte Farbhelligkeit gleich, die vierte Opazität und die fünfte Opazität gleich, und die vierte Opazität und die sechste Opazität unterschiedlich. In diesem Beispiel lässt sich also durch gezieltes Mischen des vierten Ausgangsmaterials und des fünften Ausgangsmaterials gezielt eine Farbe der Dentalrestauration einstellen. Das kann lokal erfolgen, d. h. an unterschiedlichen Stellen der Dentalrestauration können das vierte Ausgangsmaterial und das fünfte Ausgangsmaterial in unterschiedlichen Verhältnissen gemischt werden, sodass sich an diesen Stellen unterschiedliche Farben der Dentalrestauration ergeben. Ebenso lässt sich durch gezieltes Mischen des vierten Ausgangsmaterials und des fünften Ausgangsmaterials gezielt eine Farbhelligkeit der Dentalrestauration einstellen. Das kann wieder lokal erfolgen, d. h. an unterschiedlichen Stellen der Dentalrestauration können das vierte Ausgangsmaterial und das fünfte Ausgangsmaterial in unterschiedlichen Verhältnissen gemischt werden, sodass sich an diesen Stellen unterschiedliche Farbhelligkeiten der Dentalrestauration ergeben. Das vierte Ausgangsmaterial bzw. das fünften Ausgangsmaterial und das sechste Ausgangsmaterial unterscheiden sich hinsichtlich der Opazität. Folglich lässt sich durch gezieltes Mischen des vierten Ausgangsmaterials bzw. des fünften Ausgangsmaterials und des sechsten Ausgangsmaterials gezielt eine Opazität der Dentalrestauration einstellen. Das kann wieder lokal erfolgen, d. h. an unterschiedlichen Stellen der Dentalrestauration können das vierte Ausgangsmaterial bzw. das fünfte Ausgangsmaterial und das sechste Ausgangsmaterial in unterschiedlichen Verhältnissen gemischt werden, sodass sich an diesen Stellen unterschiedliche Opazitäten der Dentalrestauration ergeben. Es versteht sich, dass sich durch ein gezieltes Mischungsverhältnis des vierten Ausgangsmaterials und des fünften Ausgangsmaterials sowie durch ein gezieltes Mischungsverhältnis des vierten Ausgangsmaterials und des sechsten Ausgangsmaterials auch ein festes Mischungsverhältnis zwischen fünftem Ausgangsmaterial und sechstem Ausgangsmaterial ergibt. Insgesamt lässt sich also bei der Dentalrestauration, genauer gesagt im Bereich der Dentalrestauration aus dem Material der zweiten Materialart, lokal sowohl eine Farbe, als auch eine Farbhelligkeit, als auch eine Opazität gezielt einstellen. Auf diese Weise erhält die Dentalrestauration ein naturgetreues Erscheinungsbild.

In einem Beispiel, in dem die vierte Opazität und die fünfte Opazität gleich sind und die sechste Opazität demgegenüber unterschiedlich ist, können die vierte Opazität und die fünfte Opazität höher sein als die sechste Opazität. Das ist vorteilhaft, wenn eine herzustellende Dentalrestauration überwiegend eine hohe Opazität aufweist. Das ist beispielsweise der Fall bei einem Dentinkern einer Dentalrestauration, die ein Ersatzzahn ist. Lokal unterschiedliche Opazitäten können somit dadurch eingestellt werden, das auf Basis der vierten und fünften Opazität, die vergleichsweise hoch ist, lokal die Opazität durch Beimischen des sechsten Ausgangsmaterials mit der sechsten, niedrigeren Opazität verringert, d. h. die Transluzenz erhöht, wird. Das ist beispielsweise für eine Schneide eines Ersatzzahns vorteilhaft.

In einem anderen Beispiel, in dem die vierte Opazität und die fünfte Opazität gleich sind und die sechste Opazität demgegenüber unterschiedlich ist, können die vierte Opazität und die fünfte Opazität niedriger seien als die sechste Opazität. Das ist vorteilhaft, wenn eine herzustellende Dentalrestauration überwiegend eine niedrige Opazität aufweist. Das ist beispielsweise der Fall bei einer Prothesenbasis, die Zahnfleisch nachahmt. Lokal unterschiedliche Opazitäten können somit dadurch eingestellt werden, das auf Basis der vierten und fünften Opazität, die vergleichsweise niedrig ist, lokal die Opazität durch Beimischen des sechsten Ausgangsmaterials mit der sechsten, höheren Opazität erhöht, d. h. die Transluzenz verringert, wird. Das ist beispielsweise vorteilhaft, um Äderchen in der Prothesenbasis nachzuahmen.

Das Material der ersten Materialart kann ein Zahnersatzmaterial sein. Das Material der zweiten Materialart kann ein Zahnfleischersatzmaterial sein. Alternativ kann das Material der ersten Materialart ein Zahnfleischersatzmaterial sein und das Material der zweiten Materialart ein Zahnersatzmaterial. Es lassen sich folglich Dentalrestaurationen gemäß unterschiedlicher Varianten herstellen. In einer ersten Variante umfasst die Dentalrestauration einen oder mehrere Ersatzzähne. Diese sind aus dem Zahnersatzmaterial hergestellt. In einer zweiten Variante umfasst die Dentalrestauration eine Prothesenbasis, d. h. eine Nachbildung von Zahnfleisch. Diese ist aus dem Zahnfleischersatzmaterial hergestellt. In einer dritten Variante umfasst die Dentalrestauration sowohl eine Prothesenbasis, die aus dem Zahnfleischersatzmaterial hergestellt ist, als auch wenigstens einen Ersatzzahn, der aus dem Zahnersatzmaterial hergestellt ist. In allen diesen Varianten hat die Dentalrestauration ein naturgetreues Erscheinungsbild.

Für den Fall, dass das Material der ersten Materialart ein Zahnersatzmaterial ist, können eine oder mehrere ausgewählt aus erster Farbe, zweiter Farbe und dritter Farbe eine Zahnfarbe sein.

Für den Fall, dass das Material der zweiten Materialart ein Zahnfleischersatzmaterial ist, können eine oder mehrere ausgewählt aus vierter Farbe, fünfter Farbe und sechster Farbe eine Zahnfleischfarbe sein.

Für den Fall, dass das Material der ersten Materialart ein Zahnfleischersatzmaterial ist, können eine oder mehrere ausgewählt aus erster Farbe, zweiter Farbe und dritter Farbe eine Zahnfleischfarbe sein.

Für den Fall, dass das Material der zweiten Materialart ein Zahnersatzmaterial ist, können eine oder mehrere ausgewählt aus vierter Farbe, fünfter Farbe und sechster Farbe eine Zahnfarbe sein.

In den vorgenannten Fällen kann die Zahnfarbe eine empirisch ermittelte Zahnfarbe sein. Alternativ oder zusätzlich kann die Zahnfleischfarbe eine empirisch ermittelte Zahnfleischfarbe sein.

In einem Ausführungsbeispiel ist die erste Farbe durch einen a-Wert und einen b-Wert und die erste Farbhelligkeit durch einen L-Wert in einem Lab-Farbmodell definiert. Alternativ oder zusätzlich ist die zweite Farbe durch einen a-Wert und einen b-Wert und die zweite Farbhelligkeit durch einen L-Wert in einem Lab-Farbmodell definiert. Alternativ oder zusätzlich ist die dritte Farbe durch einen a-Wert und einen b-Wert und die dritte Farbhelligkeit durch einen L-Wert in einem Lab-Farbmodell definiert. Alternativ oder zusätzlich ist die vierte Farbe durch einen a-Wert und einen b-Wert und die vierte Farbhelligkeit durch einen L-Wert in einem Lab-Farbmodell definiert. Alternativ oder zusätzlich ist die fünfte Farbe durch einen a-Wert und einen b-Wert und die fünfte Farbhelligkeit durch einen L-Wert in einem Lab-Farbmodell definiert. Alternativ oder zusätzlich ist die sechste Farbe durch einen a-Wert und einen b-Wert und die sechste Farbhelligkeit durch einen L-Wert in einem Lab-Farbmodell definiert. Es sind also eine oder mehrere aus erster Farbe, zweiter Farbe, dritter Farbe, vierter Farbe, fünfter Farbe und sechster Farbe sowie erster Farbhelligkeit, zweiter Farbhelligkeit, dritter Farbhelligkeit, vierter Farbhelligkeit, fünfter Farbhelligkeit und sechster Farbhelligkeit mithilfe des bereits erläuterten Lab-Farbmodells definiert. Dieses Farbmodell sieht einen Helligkeitswert (L-Wert), einen a-Farbwert entlang einer Achse, die durch die Farben grün und rot definiert ist, und einen b-Farbwert entlang einer Achse, die durch die Farben gelb und blau definiert ist, vor, um Farben und Farbhelligkeiten innerhalb des auf diese Weise aufgespannten Farbbereichs oder Farbraums zu beschreiben. Das Lab-Farbmodell eignet sich besonders gut, um gängige Farben und Farbhelligkeiten für Dentalrestaurationen zu beschreiben. Dementsprechend stellt es eine einfache und zuverlässige Art dar, eine oder mehrere aus erster Farbe, zweiter Farbe, dritter Farbe, vierter Farbe, fünfter Farbe und sechster Farbe sowie erster Farbhelligkeit, zweiter Farbhelligkeit, dritter Farbhelligkeit, vierter Farbhelligkeit, fünfter Farbhelligkeit und sechster Farbhelligkeit zu beschreiben.

Gemäß einer Variante erfolgt das Aufbauen des Bereichs der Dentalrestauration aus dem Material der ersten Materialart additiv. Alternativ oder zusätzlich erfolgt das Aufbauen des Bereichs der Dentalrestauration aus dem Material der zweiten Materialart additiv. Die Dentalrestauration wird also mittels eines additiven oder generativen Fertigungsverfahrens hergestellt. Auf diese Weise lassen sich patientenspezifische Dentalrestaurationen produzieren. Dabei können die Dentalrestaurationen funktional, d.h. mechanisch, und ästhetisch, insbesondere betreffend die Farbe, Farbhelligkeit und Opazität, höchsten Ansprüchen genügen. Die additive Herstellung der Dentalrestauration beinhaltet beispielsweise eine schichtweise Herstellung der Dentalrestauration. Beispiele für derartige additive Herstellungsverfahren sind Fused Deposition Modelling (FDM) und andere Extrusionsverfahren, Laser Induced Forward Transfer (LIFT) und Material Jetting. Letzteres wird vom klassischen Inkjet Printing (2D-Printing) abgeleitet. Bei allen diesen Verfahren kommt zum Tragen, dass sich durch Nutzung des erfindungsgemäßen Verfahrens naturgetreue Dentalrestauration herstellen lassen, wobei jedoch nur vergleichsweise wenige Ausgangsmaterialien benötigt werden. Das vereinfacht die Ausführung dieser additiven Herstellungsverfahren da lediglich vergleichsweise wenige Material- und/oder Farbkanäle benötigt werden. Dennoch lassen sich Dentalrestaurationen mit unterschiedlichen Farben, unterschiedlichen Farbhelligkeiten und/oder unterschiedlichen Opazitäten herstellen.

Die Aufgabe wird darüber hinaus durch eine Vorrichtung gemäß Anspruch 11 gelöst.

Wieder kann das Material der ersten Materialart ein Zahnersatzmaterial oder ein Zahnfleischersatzmaterial sein. Mittels einer derartigen Vorrichtung lässt sich eine Dentalrestauration herstellen, die wenigstens zwei Abschnitte unterschiedlicher Farbe und wenigstens zwei Abschnitte unterschiedlicher Farbhelligkeit aufweist. Derartige Dentalrestaurationen haben ein naturgetreues Erscheinungsbild. Gleichzeitig ist der Aufbau der Vorrichtung einfach, da lediglich eine erste Bereitstellungseinheit und eine zweite Bereitstellungseinheit benötigt werden. Weitere Bereitstellungseinheiten für Ausgangsmaterialien werden nicht benötigt und nicht verwendet. Folglich lassen sich mittels der vergleichsweise einfach aufgebauten erfindungsgemäßen Vorrichtung naturgetreue Dentalrestaurationen aufwandsarm herstellen. Im Übrigen gelten die Effekte, Vorteile und weiterführenden Erläuterungen, die im Zusammenhang mit dem erfindungsgemäßen Verfahren erwähnt wurden, in gleicher Weise auch für die erfindungsgemäße Vorrichtung.

Es versteht sich, dass bei der erfindungsgemäßen Vorrichtung die erste Bereitstellungseinheit und die zweite Bereitstellungseinheit sowie der Bauraum derart relativ zueinander angeordnet sind, dass der Bereich der Dentalrestauration aus dem Material der ersten Materialart innerhalb des Bauraums aufgebaut werden kann.

Die Einfachheit der erfindungsgemäßen Vorrichtung, die lediglich eine erste Bereitstellungseinheit und eine zweite Bereitstellungseinheit nutzt, wird insbesondere im Vergleich zu Vorrichtungen deutlich, bei denen ein größerer Farbbereich oder Farbraum und ein größerer Farbhelligkeitsbereich verwendet wird. Wie bereits erwähnt, kann in diesem Zusammenhang eine Abwandlung des CMYK- Farbmodells verwendet werden. Soll basierend auf diesem Farbmodell eine Dentalrestauration hergestellt werden, ist zusätzlich ein weißes Material notwendig. Darüber hinaus kann das CMYK-Farbmodell dadurch vereinfacht werden, dass schwarz mittels Cyan (C), Magenta (M) und yellow (Y) gemischt wird. Für die Herstellung einer Dentalrestauration benötigt man somit wenigstens vier Bereitstellungseinheiten, wobei eine erste Bereitstellungseinheit ein erstes Ausgangsmaterial der Farbe Cyan bereitstellt, eine zweite Bereitstellungseinheit ein zweites Ausgangsmaterial der Farbe Magenta bereitstellt, eine dritte Bereitstellungseinheit ein drittes Ausgangsmaterial der Farbe yellow bereitstellt, und eine vierte Bereitstellungseinheit ein viertes Ausgangsmaterial bereitstellt, das weiß ist. Verglichen mit der erfindungsgemäßen Vorrichtung werden somit anstelle von lediglich zwei Bereitstellungseinheiten insgesamt wenigstens vier Bereitstellungseinheiten benötigt.

Die erfindungsgemäße Vorrichtung kann dazu verwendet werden, das erfindungsgemäße Verfahren auszuführen.

Erfindungsgemäß umfasst die Vorrichtung ferner eine dritte Bereitstellungseinheit zum Bereitstellen eines dritten Ausgangsmaterials der ersten Materialart, wobei das dritte Ausgangsmaterial eine dritte Farbe, eine dritte Farbhelligkeit und eine dritte Opazität aufweist. Dabei ist der Bauraum, zum Aufbauen wenigstens eines Bereichs der Dentalrestauration aus dem Material der ersten Materialart durch räumliches Anordnen einer Mehrzahl von Volumensegmenten ausgebildet. Jedes Volumensegment ist ausschließlich aus einem oder mehreren ausgewählt aus erstem Ausgangsmaterial, zweitem Ausgangsmaterial und drittem Ausgangsmaterial gebildet. In diesem Ausführungsbeispiel kommt also eine dritte Bereitstellungseinheit hinzu. Es lassen sich somit Dentalrestaurationen herstellen, die wenigstens zwei Abschnitte unterschiedlicher Farbe, wenigstens zwei Abschnitte unterschiedlicher Farbhelligkeit und wenigstens zwei Abschnitte unterschiedlicher Opazität aufweisen. Das verleiht der Dentalrestauration ein besonders naturgetreues Erscheinungsbild. Dennoch ist die Vorrichtung mit nur drei Bereitstellungseinheiten vergleichsweise einfach aufgebaut. Würde man bei der Anwendung des bereits erläuterten, abgewandelten CMYK-Modells (Cyan, Magenta, Yellow, White (anstelle von Key/Schwarz)) noch eine variable Transluzenz mit ins Spiel bringen wollen, bräuchte man hier eine zusätzliche Bereitstellungseinheit für transparentes Material, also insgesamt fünf Bereitstellungseinheiten pro Materialart. Im Übrigen kann auf die Ausführungen zum dritten Ausgangsmaterial verwiesen werden, die im Zusammenhang mit dem erfindungsgemäßen Verfahren gemacht wurden.

Gemäß einem Beispiel ist die Vorrichtung ferner zur Herstellung einer Dentalrestauration umfassend ein Material einer zweiten Materialart ausgebildet. Die Vorrichtung umfasst zusätzlich:
- eine vierte Bereitstellungseinheit zum Bereitstellen eines vierten Ausgangsmaterials der zweiten Materialart, wobei das vierte Ausgangsmaterial eine vierte Farbe, eine vierte Farbhelligkeit und eine vierte Opazität aufweist,
- eine fünfte Bereitstellungseinheit zum Bereitstellen eines fünften Ausgangsmaterials der zweiten Materialart, wobei das fünfte Ausgangsmaterial eine fünfte Farbe, eine fünfte Farbhelligkeit und eine fünfte Opazität aufweist,

Der Bauraum ist zum Aufbauen wenigstens eines Bereichs der Dentalrestauration aus dem Material der zweiten Materialart durch räumliches Anordnen einer Mehrzahl von Volumensegmenten ausgebildet. Jedes Volumensegment ist ausschließlich aus einem oder mehreren ausgewählt aus viertem Ausgangsmaterial und fünftem Ausgangsmaterial gebildet. Mittels der Vorrichtung gemäß diesem Beispiel lassen sich also Dentalrestaurationen herstellen, die ein Material der ersten Materialart und ein Material der zweiten Materialart umfassen. In diesem Zusammenhang kann das Material der ersten Materialart ein Zahnersatzmaterial sein und das Material der zweiten Materialart ein Zahnfleischersatzmaterial. Der umgekehrte Fall ist ebenfalls möglich. Auch die Bereiche der Dentalrestauration aus dem Material der zweiten Materialart werden durch räumliches Anordnen einer Mehrzahl von Volumensegmenten gebildet. Die Tatsache, dass auch ein Bereich der Dentalrestauration aus einem Material der zweiten Materialart wenigstens zwei Abschnitte unterschiedlicher Farbe und wenigstens zwei Abschnitte unterschiedlicher Farbhelligkeit aufweist, verleiht diesem Bereich der Dentalrestauration ein naturgetreues Erscheinungsbild. Weiterhin ist die Vorrichtung vergleichsweise einfach aufgebaut. Insgesamt lässt sich somit eine Dentalrestauration herstellen, die wenigstens einen Bereich aus dem Material der ersten Materialart und wenigstens einen Bereich aus dem Material der zweiten Materialart umfasst, wobei sowohl der Bereich aus dem Material der ersten Materialart als auch der Bereich aus dem Material der zweiten Materialart wenigstens zwei Abschnitte unterschiedlicher Farbe und wenigstens zwei Abschnitte unterschiedlicher Farbhelligkeit aufweist. Folglich lassen sich mittels der Vorrichtung auf einfache Weise naturgetreue Dentalrestaurationen aufwandsarm herstellen.

Es versteht sich dabei, dass die vierte Bereitstellungseinheit, die fünfte Bereitstellungseinheit und der Bauraum derart relativ zueinander angeordnet sind, dass der Bereich der Dentalrestauration aus dem Material der zweiten Materialart innerhalb des Bauraums aufgebaut werden kann.

In einer Ausführungsform umfasst die Vorrichtung ferner eine sechste Bereitstellungseinheit zum Bereitstellen eines sechsten Ausgangsmaterials der zweiten Materialart, wobei das sechste Ausgangsmaterial eine sechste Farbe, eine sechste Farbhelligkeit und eine sechste Opazität aufweist. Der Bauraum ist zum Aufbauen wenigstens eines Bereichs der Dentalrestauration aus dem Material der zweiten Materialart durch räumliches Anordnen einer Mehrzahl von Volumensegmenten ausgebildet. Jedes Volumensegment ist ausschließlich aus einem oder mehreren ausgewählt aus viertem Ausgangsmaterial, fünftem Ausgangsmaterial und sechstem Ausgangsmaterial gebildet. In diesem Ausführungsbeispiel kommt also eine sechste Bereitstellungseinheit hinzu. Die Tatsache, dass die Dentalrestauration, genauer gesagt der Bereich der Dentalrestauration aus dem Material der zweiten Materialart, wenigstens zwei Abschnitte unterschiedlicher Farbe, wenigstens zwei Abschnitte unterschiedlicher Farbhelligkeit und wenigstens zwei Abschnitte unterschiedlicher Opazität aufweist, verleiht der Dentalrestauration ein besonders naturgetreues Erscheinungsbild. Gleichzeitig ist die Vorrichtung vergleichsweise einfach aufgebaut. Für den Bereich der Dentalrestauration aus dem Material der zweiten Materialart werden lediglich drei Bereitstellungseinheiten und für die Dentalrestauration insgesamt werden lediglich sechs Bereitstellungseinheiten benötigt. Weitere Bereitstellungseinheiten für Ausgangsmaterialien werden nicht benötigt und nicht verwendet.

In einem Beispiel umfasst die Vorrichtung ferner eine siebte Bereitstellungseinheit zum Bereitstellen eines Stützmaterials im Bauraum. Das Stützmaterial kann dazu verwendet werden, überhängende oder auskragende Abschnitte aus einem oder mehreren ausgewählt aus erstem Ausgangsmaterial, zweitem Ausgangsmaterial, drittem Ausgangsmaterial, viertem Ausgangsmaterial, fünftem Ausgangsmaterial und sechstem Ausgangsmaterial herzustellen.

Bei der erfindungsgemäßen Vorrichtung kann wenigstens eine aus erster Bereitstellungseinheit, zweiter Bereitstellungseinheit, dritter Bereitstellungseinheit, vierter Bereitstellungseinheit, fünfter Bereitstellungseinheit, sechster Bereitstellungseinheit und siebter Bereitstellungseinheit ein 3D-Druckkopf sein. In diesem Fall stellt die Vorrichtung eine 3D-Druckvorrichtung dar. Es lassen sich auf diese Weise mittels der Vorrichtung naturgetreue Dentalrestaurationen herstellen, die darüber hinaus patientenindividuell gestaltet und gefertigt werden können.

Außerdem wird die Aufgabe durch eine Verwendung gemäß Anspruch 14 gelöst. Die Tatsache, dass die Dentalrestauration wenigstens zwei Abschnitte unterschiedlicher Farbe und wenigstens zwei Abschnitte unterschiedlicher Farbhelligkeit aufweist, verleiht der Dentalrestauration ein naturgetreues Erscheinungsbild. Erfindungsgemäß kann dies unter Verwendung lediglich zweier Ausgangsmaterialien, d. h. des ersten Ausgangsmaterials und des zweiten Ausgangsmaterials, erreicht werden. Weitere Ausgangsmaterialien werden nicht benötigt und nicht verwendet. Aus diesem Grund macht die erfindungsgemäße Verwendung das Herstellen einer derartigen Dentalrestauration vergleichsweise einfach. Mit anderen Worten lassen sich mittels der erfindungsgemäßen Verwendung naturgetreue Dentalrestauration aufwandsarm herstellen. Im Übrigen kann auf die Ausführungen zum erfindungsgemäßen Verfahren verwiesen werden. Die dort genannten Varianten, Effekte und Vorteile gelten analog auch für die erfindungsgemäße Verwendung.

Erfindungsgemäß werden ausschließlich das erste Ausgangsmaterial der ersten Materialart, das zweite Ausgangsmaterial der ersten Materialart und ein drittes Ausgangsmaterial der ersten Materialart zum Herstellen des Bereichs der Dentalrestauration aus dem Material der ersten Materialart verwendet. Der Bereich weist wenigstens zwei Abschnitte unterschiedlicher Farbe und wenigstens zwei Abschnitte unterschiedlicher Farbhelligkeit und wenigstens zwei Abschnitte unterschiedlicher Opazität auf. In diesem Ausführungsbeispiel kommt also ein drittes Ausgangsmaterial hinzu. Die Tatsache, dass die Dentalrestauration wenigstens zwei Abschnitte unterschiedlicher Farbe, wenigstens zwei Abschnitte unterschiedlicher Farbhelligkeit und wenigstens zwei Abschnitte unterschiedlicher Opazität aufweist, verleiht der Dentalrestauration ein besonders naturgetreues Erscheinungsbild. Das wird auf vergleichsweise einfache Art und Weise durch die Verwendung der lediglich drei Ausgangsmaterialien erreicht. Weitere Ausgangsmaterialien werden nicht benötigt und nicht verwendet. Auf die vorstehenden Erläuterungen, insbesondere zum erfindungsgemäßen Verfahren, wird verwiesen.

Gemäß einem weiteren Beispiel der Verwendung wird ferner ausschließlich ein viertes Ausgangsmaterial einer zweiten Materialart und ein fünftes Ausgangsmaterial der zweiten Materialart zum Herstellen wenigstens eines Bereichs einer Dentalrestauration aus dem Material der zweiten Materialart verwendet. Der Bereich weist wenigstens zwei Abschnitte unterschiedlicher Farbe und wenigstens zwei Abschnitte unterschiedlicher Farbhelligkeit auf. Die herzustellende Dentalrestauration umfasst also ein Material der ersten Materialart und ein Material der zweiten Materialart. In diesem Zusammenhang kann das Material der ersten Materialart ein Zahnersatzmaterial sein und das Material der zweiten Materialart ein Zahnfleischersatzmaterial. Der umgekehrte Fall ist ebenfalls möglich. Die Tatsache, dass auch ein Bereich der Dentalrestauration aus dem Material der zweiten Materialart wenigstens zwei Abschnitte unterschiedlicher Farbe und wenigstens zwei Abschnitte unterschiedlicher Farbhelligkeit aufweist, verleiht diesem Abschnitt der Dentalrestauration ein naturgetreues Erscheinungsbild. Das kann unter Verwendung lediglich zweier Ausgangsmaterialien, d. h. des vierten Ausgangsmaterials und des fünften Ausgangsmaterials erreicht werden. Weitere Ausgangsmaterialien werden nicht benötigt und nicht verwendet. Aus diesem Grund lässt sich die Dentalrestauration vergleichsweise einfach herstellen.

In einem Beispiel werden ausschließlich das vierte Ausgangsmaterial der zweiten Materialart, das fünfte Ausgangsmaterial der zweiten Materialart und ein sechstes Ausgangsmaterial der zweiten Materialart zum Herstellen wenigstens eines Bereichs einer Dentalrestauration aus einem Material der zweiten Materialart verwendet. Der Bereich weist wenigstens zwei Abschnitte unterschiedlicher Farbe und wenigstens zwei Abschnitte unterschiedlicher Farbhelligkeit und wenigstens zwei Abschnitte unterschiedlicher Opazität auf. In diesem Ausführungsbeispiel kommt also ein sechstes Ausgangsmaterial hinzu. Die Tatsache, dass die Dentalrestauration, genauer gesagt der Bereich der Dentalrestauration aus dem Material der zweiten Materialart, wenigstens zwei Abschnitte unterschiedlicher Farbe, wenigstens zwei Abschnitte unterschiedlicher Farbhelligkeit und wenigstens zwei Abschnitte unterschiedlicher Opazität aufweist, verleiht der Dentalrestauration ein besonders naturgetreues Erscheinungsbild. Das wird auf vergleichsweise einfache Art und Weise durch die Verwendung der lediglich drei Ausgangsmaterialien erreicht. Weitere Ausgangsmaterialien werden nicht benötigt und nicht verwendet. Auf die vorstehenden Erläuterungen, insbesondere zum erfindungsgemäßen Verfahren, wird verwiesen.

Es versteht sich, dass sich die vorgenannten Beispiele und Ausführungsformen unabhängig vom Aspekt der vorliegenden Erfindung, in dessen Zusammenhang sie erläutert wurden, kombinieren lassen.

Ferner wurde die vorliegende Erfindung sowie die der Erfindung zugrunde liegende Idee anhand des Materials der ersten Materialart und des Materials der zweiten Materialart erläutert. Es versteht sich jedoch, dass die Nennung des Materials der ersten Materialart und des Materials der zweiten Materialart nicht als abschließend zu verstehen ist. Es kann also auch ein Material einer dritten Materialart, ein Material einer vierten Materialart, usw. verwendet werden. Die der Erfindung zugrundeliegenden Ideen und Konzepte können auch auf die Materialien der weiteren Materialarten angewendet werden. Allgemein gesprochen können also Materialien von n Materialarten verwendet werden. Die Dentalrestauration umfasst demnach n Bereiche, wobei jeder der n Bereiche aus einem Material einer zugeordneten Materialart hergestellt ist.

Das erfindungsgemäße Verfahren kann dabei grundsätzlich unter Verwendung von Kunststoffmaterialien oder unter Verwendung von Keramikmaterialien ausgeführt werden. Im ersten Fall sind also alle Ausgangsmaterialien Kunststoffmaterialien und im zweiten Fall sind alle Ausgangsmaterialien Keramikmaterialien. Die Keramikmaterialien können zum Beispiel in Form von Schlicker verarbeitet werden. Auch Kombinationen aus Kunststoffmaterialien und Keramikmaterialien sind denkbar.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Vorrichtung zur Herstellung einer Dentalrestauration, wobei mittels der Vorrichtung ein erfindungsgemäßes Verfahren ausgeführt wird,
- Figur 2: die Dentalrestauration aus Figur 1 in einer Detailansicht,
- Figur 3: eine Illustration der optischen Eigenschaften von Ausgangsmaterialien einer ersten Materialart und
- Figur 4: eine Illustration der optischen Eigenschaften von Ausgangsmaterialien einer zweiten Materialart.

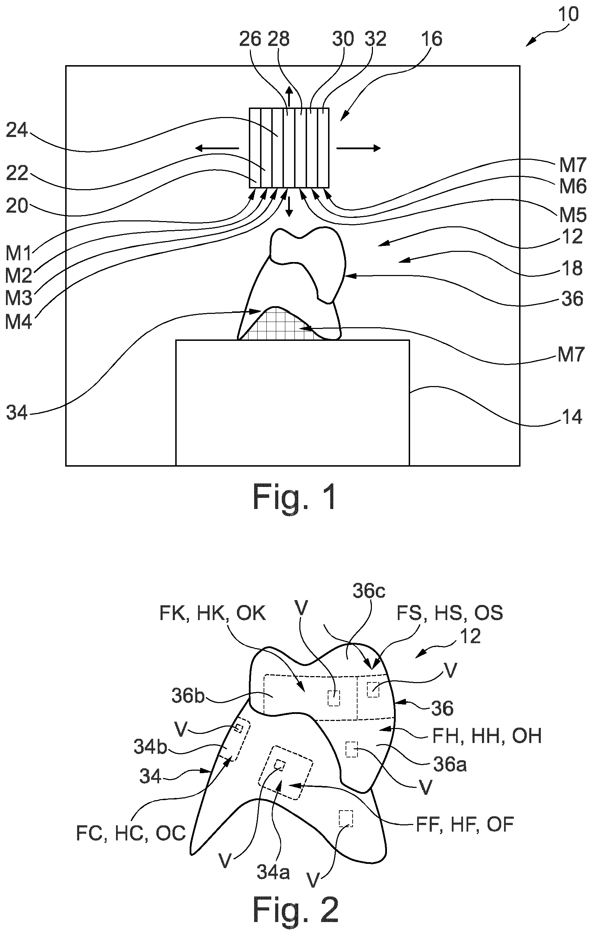

Figur 1 zeigt eine Vorrichtung 10 zur Herstellung einer Dentalrestauration 12.

Im dargestellten Ausführungsbeispiel ist die Vorrichtung 10 dazu ausgebildet, die Dentalrestauration 12 mittels eines additiven Fertigungsverfahrens herzustellen.

Die Vorrichtung 10 kann somit auch als 3D-Druck-Vorrichtung oder 3D-Drucker bezeichnet werden.

Die Vorrichtung 10 umfasst eine Lagervorrichtung 14, auf der die herzustellende Dentalrestauration 12 additiv aufgebaut werden kann.

Ferner umfasst die Vorrichtung 10 eine Einbringungseinheit 16, die dazu ausgebildet ist, später noch näher zu erläuternde Ausgangsmaterialien, aus denen die Dentalrestauration 12 mittels der Vorrichtung 10 aufgebaut wird, in einen Bauraum 18 der Vorrichtung 10 einzubringen.

Zu diesem Zweck ist die Einbringungseinheit 16 relativ zur Lagevorrichtung 14 beweglich innerhalb des Bauraums 18 gelagert.

Die Einbringungseinheit 16 umfasst insgesamt sieben Bereitstellungseinheiten.

Dabei ist eine erste Bereitstellungseinheit 20 zum Bereitstellen eines ersten Ausgangsmaterials M1 einer ersten Materialart ausgebildet.

Eine zweite Bereitstellungseinheit 22 ist zum Bereitstellen eines zweiten Ausgangsmaterials M2 der ersten Materialart ausgebildet.

Eine dritte Bereitstellungseinheit 24 ist zum Bereitstellen eines dritten Ausgangsmaterials M3 der ersten Materialart ausgebildet.

Eine vierte Bereitstellungseinheit 26 ist zum Bereitstellen eines vierten Ausgangsmaterials M4 einer zweiten Materialart ausgebildet.

Eine fünfte Bereitstellungseinheit 28 ist zum Bereitstellen eines fünften Ausgangsmaterials M5 der zweiten Materialart ausgebildet.

Eine sechste Bereitstellungseinheit 30 ist zum Bereitstellen eines sechsten Ausgangsmaterials M6 der zweiten Materialart ausgebildet.

Eine siebte Bereitstellungseinheit 32 ist zum Bereitstellen eines Stützmaterials M7 ausgebildet.

In den dargestellten Ausführungsbeispielen betrifft die erste Materialart ein Zahnersatzmaterial und die zweite Materialart ein Zahnfleischersatzmaterial.

Dabei ist das Zahnersatzmaterial ein fließfähiges Gemisch von Methacrylat(en) und/oder Acrylat(en) mit Füllstoffen für eine hohe Abrasionsbeständigkeit und Farbstoffen/Pigmenten.

Das Zahnfleischersatzmaterial ist ein fließfähiges Gemisch von Methacrylat(en) und/oder Acrylat(en) und Farbstoffen/Pigmenten. Optional weist das Zahnfleischersatzmaterial zudem Additive zur Erhöhung der Bruchzähigkeit auf.

Das erste Ausgangsmaterial M1 hat eine erste Farbe F1, eine erste Farbhelligkeit H1 und eine erste Opazität O1. Dabei ist die erste Farbe F1 durch einen a-Wert und einen b-Wert in einem Lab-Farbmodell definiert. Die erste Farbhelligkeit H1 ist durch einen L-Wert im Lab-Farbmodell definiert.

Das zweite Ausgangsmaterial M2 hat eine zweite Farbe F2, eine zweite Farbhelligkeit H2 und eine zweite Opazität O2. Dabei ist die zweite Farbe F2 durch einen a-Wert und einen b-Wert in einem Lab-Farbmodell definiert. Die zweite Farbhelligkeit H2 ist durch einen L-Wert im Lab-Farbmodell definiert.

Das dritte Ausgangsmaterial M3 hat eine dritte Farbe F3, eine dritte Farbhelligkeit H3 und eine dritte Opazität O3. Dabei ist die dritte Farbe F3 durch einen a-Wert und einen b-Wert in einem Lab-Farbmodell definiert. Die dritte Farbhelligkeit H3 ist durch einen L-Wert im Lab-Farbmodell definiert.

Das vierte Ausgangsmaterial M4 hat eine vierte Farbe F4, eine vierte Farbhelligkeit H4 und eine vierte Opazität O4. Dabei ist die vierte Farbe F4 durch einen a-Wert und einen b-Wert in einem Lab-Farbmodell definiert. Die vierte Farbhelligkeit H4 ist durch einen L-Wert im Lab-Farbmodell definiert.

Das fünfte Ausgangsmaterial M5 hat eine fünfte Farbe F5, eine fünfte Farbhelligkeit H5 und eine fünfte Opazität O5. Dabei ist die fünfte Farbe F5 durch einen a-Wert und einen b-Wert in einem Lab-Farbmodell definiert. Die fünfte Farbhelligkeit H5 ist durch einen L-Wert im Lab-Farbmodell definiert.

Das sechste Ausgangsmaterial M6 hat eine sechste Farbe F6, eine sechste Farbhelligkeit H6 und eine sechste Opazität O6. Dabei ist die sechste Farbe F6 durch einen a-Wert und einen b-Wert in einem Lab-Farbmodell definiert. Die sechste Farbhelligkeit H6 ist durch einen L-Wert im Lab-Farbmodell definiert.

Das Stützmaterial M7 hat ebenfalls eine Farbe, eine Farbhelligkeit und eine Opazität. Nachdem das Stützmaterial aber nicht Bestandteil der Dentalrestauration 12 wird, ist dessen Farbe, Farbhelligkeit und Opazität unerheblich.

Es wird bemerkt, dass in Figur 1 die herzustellende Dentalrestauration 12 zu Zwecken der einfacheren Erläuterung in einem fertig hergestellten Zustand dargestellt. Es versteht sich dabei, dass diese Dentalrestauration 12 mittels der Vorrichtung 10 beispielsweise schichtweise durch räumliche Anordnung von Volumensegmenten V aufgebaut wird. Dabei sind der besseren Übersichtlichkeit wegen in der Ansicht aus Figur 2 lediglich einige wenige Volumensegmente V eingezeichnet. Zudem sind die Volumensegmente V stark vergrößert dargestellt.

Im dargestellten Ausführungsbeispiel umfasst die Dentalrestauration 12 eine Prothesenbasis 34 und einen Ersatzzahn 36. Dabei bildet die Prothesenbasis 34 natürliches Zahnfleisch nach und der Ersatzzahn 36 bildet einen natürlichen Zahn nach.

Zu diesem Zweck ist der Ersatzzahn 36 aus dem Material der ersten Materialart, d.h. dem ersten Ausgangsmaterial M1, dem zweiten Ausgangsmaterial M2 und dem dritten Ausgangsmaterial M3 aufgebaut.

Die Prothesenbasis 34 ist aus dem Material der zweiten Materialart, d.h. dem vierten Ausgangsmaterial M4, dem fünften Ausgangsmaterial M5 und dem sechsten Ausgangsmaterial M6 aufgebaut.

Es versteht sich, dass die in den Figuren dargestellte Dentalrestauration 12 rein illustrativ ist. Je nach Anwendungsfall sind auch andere Dentalrestauration 12 denkbar. Insbesondere sind Dentalrestauration 12 denkbar, die lediglich einen oder mehrere Ersatzzähne 36 umfassen und ohne Prothesenbasis auskommen. Ebenso sind Dentalrestauration 12 denkbar, die lediglich eine Prothesenbasis 34, d. h. keine Ersatzzähne 36 umfassen.

Im dargestellten Ausführungsbeispiel ist der Ersatzzahn 36 eine naturgetreue Nachbildung eines natürlichen Zahns. Das äußert sich dadurch, dass der Ersatzzahn 36 einen ersten Abschnitt 36a aufweist, der einen Zahnhals nachbildet, einen zweiten Abschnitt 36b aufweist, der einen Dentinkern nachbildet und einen dritten Abschnitt 36c aufweist, der eine Zahnschneide nachbildet.

Dabei unterscheiden sich der erste Abschnitt 36a, der zweite Abschnitt 36b und der dritte Abschnitt 36c hinsichtlich ihrer Farbe, hinsichtlich ihrer Farbhelligkeit und hinsichtlich ihrer Opazität.

In diesem Zusammenhang hat der erste Abschnitt 36a eine Zahnhalsfarbe FH, eine Zahnhalsfarbhelligkeit HH und eine Zahnhalsopazität OH.

Der zweite Abschnitt 36b hat eine Dentinkernfarbe FK, eine Dentinkernfarbhelligkeit HK und eine Dentinkernopazität OK.

Der dritte Abschnitt 36c hat eine Zahnschneidenfarbe FS, eine Zahnschneidenfarbhelligkeit HS und eine Zahnschneidenopazität OS.

Im dargestellten Ausführungsbeispiel ist auch die Prothesenbasis 34 eine naturgetreue Nachbildung natürlichen Zahnfleischs. Das äußert sich dadurch, dass die Prothesenbasis 34 mehrere Abschnitte aufweist, die sich hinsichtlich ihrer Farbe, hinsichtlich ihrer Farbhelligkeit und hinsichtlich ihrer Opazität unterscheiden. Im dargestellten Ausführungsbeispiel sind dabei zwei exemplarische Abschnitte 34a, 34b eingezeichnet, von denen der erste Abschnitt 34a Zahnfleischgewebe nachbildet und der zweite Abschnitt 34b eine Schleimhaut nachbildet.

In diesem Zusammenhang hat der erste Abschnitt 34a eine Zahnfleischgewebefarbe FF, eine Zahnfleischgewebefarbhelligkeit HF und eine Zahnfleischgewebeopazität OF.

Der zweite Abschnitt 34b hat eine Schleimhautfarbe FC, eine Schleimhautfarbhelligkeit HC und eine Schleimhautopazität OC.

Die Dentalrestauration 12 wird mittels eines Verfahrens zum Herstellen einer Dentalrestauration hergestellt, das im Folgenden erläutert werden wird.

In einer ersten Gruppe an Schritten werden dabei zunächst die Ausgangsmaterialien M1, M2, M3, M4, M5, M6 bereitgestellt.

Genauer gesagt wird in einem ersten Schritt S1 das erste Ausgangsmaterial M1 bereitgestellt.

Ferner wird in einem zweiten Schritt S2 das zweite Ausgangsmaterial M2 bereitgestellt.

Außerdem wird in einem dritten Schritt S3 das dritte Ausgangsmaterial M3 bereitgestellt.

Je nach herzustellender Dentalrestauration können der erste Schritt S1, der zweite Schritt S2 und der dritte Schritt S3 zeitlich parallel oder nacheinander ausgeführt werden.

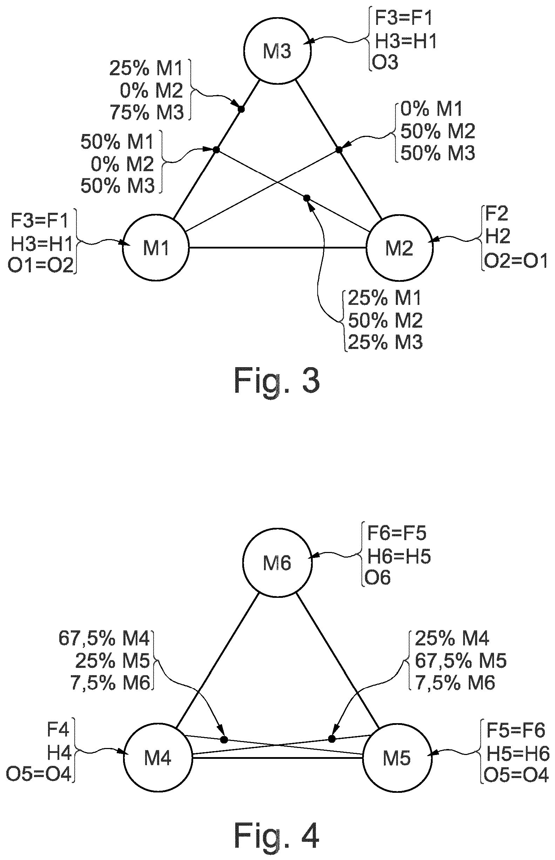

Das erste Ausgangsmaterial M1, das zweite Ausgangsmaterial M2 und das dritte Ausgangsmaterial M 3 sind zur näheren Erläuterung ihrer Eigenschaften in Figur 3 durch Kreise repräsentiert, die in einem Dreieck angeordnet sind.

Dabei sind in der dargestellten Ausführungsform die erste Farbe F1 und die dritte Farbe F3 gleich. Die zweite Farbe F2 ist gegenüber der ersten Farbe F1 und der dritten Farbe F3 unterschiedlich.

Was die Farbhelligkeit anbelangt, sind die erste Farbhelligkeit H1 und die dritte Farbhelligkeit H3 gleich. Die zweite Farbhelligkeit H2 ist gegenüber der ersten Farbhelligkeit H1 und der dritten Farbhelligkeit H3 unterschiedlich.

Im Lab-Farbmodell ausgedrückt haben also das erste Ausgangsmaterial M1 und das dritte Ausgangsmaterial dieselbe Farbe.

Das zweite Ausgangsmaterial M2 hat demgegenüber eine andere Farbe.

Beispielsweise können die erste Farbe F1 und die erste Farbhelligkeit H1 so gewählt werden, dass die Farbe des ersten Ausgangsmaterials M1 der Farbe "Bleach 3" im weit verbreiteten VITA Tooth Shades Schema entspricht oder dem nahekommt. Es versteht sich, dass aufgrund der Tatsache, dass die erste Farbe F1 und die erste Farbhelligkeit H1 im Lab-Farbmodell definiert sind, die Farbe "Bleach 3" im VITA Tooth Shades Schema unter Umständen nicht exakt getroffen werden kann.

Das dritte Ausgangsmaterial M3 hat dann dieselbe Farbe wie das erste Ausgangsmaterial M1, d.h. eine Farbe, die der Farbe "Bleach 3" im VITA Tooth Shades Schema entspricht oder dem nahekommt.

Die zweite Farbe F2 und die zweite Farbhelligkeit H2 können so gewählt werden, dass die Farbe des zweiten Ausgangsmaterials M2 der Farbe "A3.5" im VITA Tooth Shades Schema entspricht oder dem nahekommt. Wie bereits erwähnt, versteht sich, dass aufgrund der Tatsache, dass die zweite Farbe F2 und die zweite Farbhelligkeit H2 im Lab-Farbmodell definiert sind, die Farbe "A3.5" im VITA Tooth Shades Schema unter Umständen nicht exakt getroffen werden kann.

Was die Opazitäten O1, O2, O3 anbelangt, sind die erste Opazität O1 und die zweite Opazität O2 gleich. Die dritte Opazität O3 ist demgegenüber unterschiedlich.

Dabei sind die erste Opazität O1 und die zweite Opazität O2 höher als die dritte Opazität O3. Anders gesagt hat das dritte Ausgangsmaterial M3 eine höhere Transluzenz als das erste Ausgangsmaterial M1 und das zweite Ausgangsmaterial M2.

Allgemeiner gesprochen sind somit zwei, vorliegend die dritte Farbe F3 und die erste Farbe F1, ausgewählt aus erster Farbe F1, zweiter Farbe F2 und dritter Farbe F3 gleich. Gleichzeitig sind zwei, vorliegend die erste Farbe F1 und die zweite Farbe F2 oder die zweite Farbe F2 und die dritte Farbe F2, ausgewählt aus erster Farbe F1, zweiter Farbe F2 und dritter Farbe F3 unterschiedlich.

Ferner sind zwei, vorliegend die erste Farbhelligkeit H1 und die dritte Farbhelligkeit H3, ausgewählt aus erster Farbhelligkeit H1, zweiter Farbhelligkeit H2 und dritter Farbhelligkeit H3 gleich. Ebenso sind zwei, vorliegend die erste Farbhelligkeit H1 und die zweite Farbhelligkeit H2 oder die zweite Farbhelligkeit H2 und die dritte Farbhelligkeit H3, ausgewählt aus erster Farbhelligkeit H1, zweiter Farbhelligkeit H2 und dritter Farbhelligkeit H3 unterschiedlich.

Darüber hinaus sind zwei, vorliegend die erste Opazität O1 und die zweite Opazität O2, ausgewählt aus erster Opazität O1, zweiter Opazität O2 und dritter Opazität O3 gleich. Gleichzeitig sind zwei, vorliegend die erste Opazität O1 und die dritte Opazität O3 oder die dritte Opazität O3 und die zweite Opazität O2, ausgewählt aus erster Opazität O1, zweiter Opazität O3 und dritter Opazität O3 unterschiedlich.

Es wird bemerkt, dass das Paar an Ausgangsmaterialien M1, M2, M3 mit der gleichen Farbe und dergleichen Farbhelligkeit sich vom Paar an Ausgangsmaterialien M1, M2, M3 mit der gleichen Opazität unterscheidet. Diese Paare sind also nicht deckungsgleich.

Zudem wird in einem vierten Schritt S4 das vierte Ausgangsmaterial M4 bereitgestellt.

Auch wird in einem fünften Schritt S5 das fünfte Ausgangsmaterial M5 bereitgestellt.

Zusätzlich wird in einem sechsten Schritt S6 das sechste Ausgangsmaterial M6 bereitgestellt.

Je nach Gestalt und Aufbau der Dentalrestauration können dabei der vierte Schritt S4, der fünfte Schritt S5 und der sechste Schritt S6 zeitlich parallel oder zeitlich nacheinander ablaufen.

Zudem können einer oder mehrere ausgewählt aus dem vierten Schritt S4, dem fünften Schritt S5 und dem sechsten Schritt S6 mit Bezug auf einen oder mehrere ausgewählt aus erstem Schritt S1, zweitem Schritt S2 und drittem Schritt S3 zeitlich parallel oder zeitlich nacheinander ablaufen.

Das vierte Ausgangsmaterial M4, das fünfte Ausgangsmaterial M5 und das sechste Ausgangsmaterial M6 sind zur näheren Erläuterung ihrer Eigenschaften in Figur 4 durch Kreise repräsentiert, die in einem Dreieck angeordnet sind.

Dabei sind in der dargestellten Ausführungsform die fünfte Farbe F5 und die sechste Farbe F6 gleich. Die vierte Farbe F4 ist gegenüber der fünften Farbe F5 und der sechsten Farbe F6 unterschiedlich.

Was die Farbhelligkeit anbelangt, sind die fünfte Farbhelligkeit H5 und die sechste Farbhelligkeit H6 gleich. Die vierte Farbhelligkeit H4 ist gegenüber der fünften Farbhelligkeit H5 und der sechsten Farbhelligkeit H6 unterschiedlich.

Im Lab-Farbmodell ausgedrückt haben also das fünfte Ausgangsmaterial M5 und das sechste Ausgangsmaterial M6 dieselbe Farbe.

Das vierte Ausgangsmaterial M4 hat demgegenüber eine andere Farbe.

Beispielsweise können die fünfte Farbe F5 und die fünfte Farbhelligkeit H5 so gewählt werden, dass die Farbe des fünften Ausgangsmaterials M5 ein Weinrot ist.

Das sechste Ausgangsmaterial M6 hat dann dieselbe Farbe wie das fünfte Ausgangsmaterial M5, d.h. ebenfalls Weinrot.

Die vierte Farbe F4 und die vierte Farbhelligkeit H4 können so gewählt werden, dass die Farbe des vierten Ausgangsmaterials ein Rosa ist.

Was die Opazitäten O4, O5, O6 anbelangt, sind die vierte Opazität O4 und die fünfte Opazität O5 gleich. Die sechste Opazität O6 ist demgegenüber unterschiedlich.

Dabei sind die vierte Opazität O4 und die fünfte Opazität O5 geringer als die sechste Opazität O6. Anders gesagt hat das sechste Ausgangsmaterial M6 eine geringere Transluzenz als das vierte Ausgangsmaterial M4 und das fünfte Ausgangsmaterial M5.

Allgemeiner gesprochen sind somit zwei, vorliegend die fünfte Farbe F5 und die sechste Farbe F6, ausgewählt aus vierter Farbe F4, fünfter Farbe F5 und sechster Farbe F6 gleich. Gleichzeitig sind zwei, vorliegend die vierte Farbe F4 und die fünfte Farbe F5 oder die vierte Farbe F4 und die sechste Farbe F6, ausgewählt aus vierter Farbe F4, fünfter Farbe F5 und sechster Farbe F6 unterschiedlich.

Ferner sind zwei, vorliegend die fünfte Farbhelligkeit H5 und die sechste Farbhelligkeit H6, ausgewählt aus vierter Farbhelligkeit H4, fünfter Farbhelligkeit H5 und sechster Farbhelligkeit H6 gleich. Ebenso sind zwei, vorliegend die vierte Farbhelligkeit H4 und die fünfte Farbhelligkeit H5 oder die vierte Farbhelligkeit H4 und die sechste Farbhelligkeit H6, ausgewählt aus vierter Farbhelligkeit H4, fünfter Farbhelligkeit H5 und sechster Farbhelligkeit H6 unterschiedlich.

Darüber hinaus sind zwei, vorliegend die vierte Opazität O4 und die fünfte Opazität O5, ausgewählt aus vierter Opazität O4, fünfter Opazität O5 und sechster Opazität O6 gleich. Gleichzeitig sind zwei, vorliegend die vierte Opazität O4 und die sechste Opazität O6 oder die fünfte Opazität O5 und die sechste Opazität O6, ausgewählt aus vierter Opazität O4, fünfter Opazität O5 und sechster Opazität O6 unterschiedlich.

Es wird bemerkt, dass das Paar an Ausgangsmaterialien M4, M5, M6, mit der gleichen Farbe und dergleichen Farbhelligkeit sich vom Paar an Ausgangsmaterialien M4, M5, M6 mit der gleichen Opazität unterscheidet. Diese Paare sind also nicht deckungsgleich.

Dabei erfolgt das Bereitstellen der Ausgangsmaterialien M1, M2, M3, M4, M5, M6 mittels der jeweils zugeordneten Bereitstellungseinheiten 20, 22, 24, 26, 28, 30.

In einem nachfolgenden siebten Schritt S7 werden dann die Bereiche der Dentalrestauration 12 aus dem Material der zweiten Materialart, also diejenigen Bereiche der Dentalrestauration 12 aus Zahnfleischersatzmaterial aufgebaut. Vorliegend stellt die Prothesenbasis 34 einen solchen Bereich dar.

Hierzu werden eine Mehrzahl von Volumensegmenten V oder Voxeln räumlich angeordnet.

Dabei ist jedes Volumensegment V oder Voxel ausschließlich aus einem oder mehreren ausgewählt aus viertem Ausgangsmaterial M4, fünftem Ausgangsmaterial M5 und sechstem Ausgangsmaterial M6 gebildet ist.

Mit anderen Worten kann jedes Volumensegment V ausschließlich das vierte Ausgangsmaterial M4, ausschließlich das fünfte Ausgangsmaterial M5 oder ausschließlich das sechste Ausgangsmaterial M6 umfassen.

Auch kann jedes Volumensegment V eine Mischung aus viertem Ausgangsmaterial M4 und fünftem Ausgangsmaterial M5, eine Mischung aus viertem Ausgangsmaterial M4 und sechstem Ausgangsmaterial M6 oder eine Mischung aus fünftem Ausgangsmaterial M5 und sechstem Ausgangsmaterial M6 umfassen.

Zudem ist es möglich, dass jedes Volumensegment V eine Mischung aus dem vierten Ausgangsmaterial M4, dem fünften Ausgangsmaterial M5 und dem sechsten Ausgangsmaterial M6 umfasst.

Es lassen sich somit durch entsprechendes Mischen oder Vorsehen in Reinform der Ausgangsmaterialien M4, M5, M6 für jedes Volumensegment V eine Farbe, eine Farbhelligkeit und eine Opazität festlegen. Über das vierte Ausgangsmaterial M4, das fünfte Ausgangsmaterial M5 und das sechste Ausgangsmaterial M6 hinausgehende Ausgangsmaterialien werden zur Herstellung des Bereichs der Dentalrestauration aus dem Material der zweiten Materialart, d.h. dem Zahnfleischersatzmaterial, nicht verwendet.

Auf diese Weise wird der Abschnitt 34a mit einer Zahnfleischgewebefarbe FF, einer Zahnfleischgewebefarbhelligkeit HF und einer Zahnfleischgewebeopazität OF versehen.

Hierzu kann die Mischung aus 25 % des vierten Ausgangsmaterials M4, 67,5 % des fünften Ausgangsmaterials M5 und 7,5% des sechsten Ausgangsmaterials M6 zur Herstellung des Abschnitt 34a der Prothesenbasis 34 verwendet werden. Diese Mischung hat also die Zahnfleischgewebefarbe FF, die Zahnfleischgewebefarbhelligkeit HF und die Zahnfleischgewebeopazität OF.

Der Abschnitt 34b wird mit einer Schleimhautfarbe FC, einer Schleimhautfarbhelligkeit HC und einer Schleimhautopazität OC versehen.

Hierzu kann die Mischung aus 67,5 % des vierten Ausgangsmaterials M4, 25 % des fünften Ausgangsmaterials M5 und 7,5% des sechsten Ausgangsmaterials M6 zur Herstellung des Abschnitt 34b der Prothesenbasis 34 verwendet werden. Diese Mischung hat also die Schleimhautfarbe FC, die Schleimhautfarbhelligkeit HC und die Schleimhautopazität OC. Alternativ kann das sechste Ausgangsmaterial M6 in Reinform verwendet werden.

Der Aufbau der Prothesenbasis 34 erfolgt somit additiv, d. h. volumensegment- oder voxelweise.

In einem anschließenden achten Schritt S8 werden dann die Bereiche der Dentalrestauration 12 aus dem Material der ersten Materialart, also diejenigen Bereiche der Dentalrestauration 12 aus Zahnersatzmaterial aufgebaut. Vorliegend stellt der Ersatzzahn 36 einen solchen Bereich dar.

Dabei wird der achte Schritt S8 lediglich der einfacheren Erläuterung wegen separat vom siebten Schritt S7 beschrieben. In der Realität können der siebente Schritt S7 und der achte Schritt S8 auch zeitlich parallel oder alternierend ablaufen.

Hierzu werden eine Mehrzahl von Volumensegmenten V oder Voxeln räumlich angeordnet.

Dabei ist jedes Volumensegment V oder Voxel ausschließlich aus einem oder mehreren ausgewählt aus erstem Ausgangsmaterial M1, zweitem Ausgangsmaterial M2 und drittem Ausgangsmaterial M3 gebildet.

Mit anderen Worten kann jedes Volumensegment V ausschließlich das erste Ausgangsmaterial M1, ausschließlich das zweite Ausgangsmaterial M2 oder ausschließlich das dritte Ausgangsmaterial M3 umfassen.

Auch kann jedes Volumensegment V eine Mischung aus erstem Ausgangsmaterial M1 und zweitem Ausgangsmaterial M2, eine Mischung aus erstem Ausgangsmaterial M1 und drittem Ausgangsmaterial M3 oder eine Mischung aus zweitem Ausgangsmaterial M2 und drittem Ausgangsmaterial M3 umfassen.

Zudem ist es möglich, dass jedes Volumensegment V eine Mischung aus dem ersten Ausgangsmaterial M1, dem zweiten Ausgangsmaterial M2 und dem dritten Ausgangsmaterial M3 umfasst.

Zum besseren Verständnis dieses Konzepts sind in Figur 3 insgesamt vier verschiedene Mischungen der Ausgangsmaterialien M1, M2, M3 eingetragen, die dementsprechend jeweils unterschiedliche Farben, Farbhelligkeiten und Opazitäten aufweisen.

Es lassen sich somit durch entsprechendes Mischen oder Vorsehen in Reinform der Ausgangsmaterialien M1, M2, M3 für jedes Volumensegment V eine Farbe, eine Farbhelligkeit und eine Opazität festlegen. Über das erste Ausgangsmaterial M1, das zweite Ausgangsmaterial M2 und das dritte Ausgangsmaterial M3 hinausgehende Ausgangsmaterialien werden zur Herstellung des Bereichs der Dentalrestauration aus dem Material der ersten Materialart, d.h. dem Zahnersatzmaterial, nicht verwendet.

In diesem Zusammenhang kann die Mischung aus 25 % des ersten Ausgangsmaterials M1, 0% des zweiten Ausgangsmaterials M2 und 75% des dritten Ausgangsmaterials M3 zur Herstellung des dritten Abschnitts 36c des Ersatzzahns 36 verwendet werden, der eine Zahnschneide nachbildet. Diese Mischung hat also die Zahnschneidenfarbe FS, die Zahnschneidenfarbhelligkeit HS und die Zahnschneidenopazität OS.

Ferner kann die Mischung aus 0 % des ersten Ausgangsmaterials M1, 50% des zweiten Ausgangsmaterials M2 und 50% des dritten Ausgangsmaterials M3 zur Herstellung des zweiten Abschnitts 36b des Ersatzzahns 36 verwendet werden, der einen Dentinkern nachbildet. Diese Mischung hat also die Dentinkernfarbe FK, die Dentinkernfarbhelligkeit HK und die Dentinkernopazität OK. Diese Mischung ist besonders gut für einen Dentinkern eines Backenzahns oder Molars geeignet. Für den zweiten Abschnitt 36b eines Ersatzzahns 36, der einen Frontzahn nachbildet, kommt alternativ die Mischung aus 50 % des ersten Ausgangsmaterials M1, 0% des zweiten Ausgangsmaterials M2 und 50% des dritten Ausgangsmaterials M3 in Frage.

Auch kann die Mischung aus 25 % des ersten Ausgangsmaterials M1, 50% des zweiten Ausgangsmaterials M2 und 25% des dritten Ausgangsmaterials M3 zur Herstellung des ersten Abschnitts 36a des Ersatzzahns 36 verwendet werden, der einen Zahnhals nachbildet. Diese Mischung hat also die Zahnhalsfarbe FH, die Zahnhalsfarbhelligkeit HH und die Zahnhalsopazität OH.

Auf diese Weise erhält der Abschnitt 36a eine Zahnhalsfarbe FH, eine Zahnhalsfarbhelligkeit HH und eine Zahnhalsopazität OH.

Der zweite Abschnitt 36b erhält eine Dentinkernfarbe FK, eine Dentinkernfarbhelligkeit HK und eine Dentinkernopazität OK.

Der dritte Abschnitt 36c erhält eine Zahnschneidenfarbe FS, eine Zahnschneidenfarbhelligkeit HS und eine Zahnschneidenopazität OS.

Der Aufbau des Ersatzzahns 36 erfolgt somit additiv, d. h. volumensegment- oder voxelweise.

Dieses Verfahren wird mittels der Vorrichtung 10 ausgeführt. Es versteht sich somit, dass der Bauraum 18 zum Aufbauen des Bereichs der Dentalrestauration 12 aus dem Material der ersten Materialart, d.h. dem Zahnersatzmaterial, durch räumliches Anordnen einer Mehrzahl von Volumensegmenten V ausgebildet ist. Ferner ist der Bauraum 18 zum Aufbauen des Bereichs der Dentalrestauration 12 aus dem Material der zweiten Materialart, d.h. dem Zahnfleischersatzmaterial, durch räumliches Anordnen einer Mehrzahl an Volumensegmenten V ausgebildet.

Zusammenfassend werden im dargestellten Ausführungsbeispiel ausschließlich das erste Ausgangsmaterial M1 der ersten Materialart, das zweiten Ausgangsmaterial M2 der ersten Materialart und das dritte Ausgangsmaterial M3 der ersten Materialart zum Herstellen eines Bereichs der Dentalrestauration 12 aus dem Material der ersten Materialart, vorliegend dem Ersatzzahn 36, verwendet. Weitere Ausgangsmaterialien werden zum Herstellen des Bereichs der Dentalrestauration 12 aus dem Material der ersten Materialart nicht verwendet.

Weiter werden im dargestellten Ausführungsbeispiel ausschließlich das vierte Ausgangsmaterial M4 der zweiten Materialart, das fünfte Ausgangsmaterial M5 der zweiten Materialart und das sechste Ausgangsmaterial M6 der zweiten Materialart zum Herstellen eines Bereichs der Dentalrestauration 12 aus dem Material der zweiten Materialart, vorliegend der Prothesenbasis 34, verwendet. Weitere Ausgangsmaterialien werden zum Herstellen des Bereichs der Dentalrestauration 12 aus dem Material der zweiten Materialart nicht verwendet.

### Bezugszeichenliste

- 10: Vorrichtung zur Herstellung einer Dentalrestauration
- 12: Dentalrestauration
- 14: Lagervorrichtung
- 16: Einbringungseinheit
- 18: Bauraum
- 20: erste Bereitstellungseinheit
- 22: zweite Bereitstellungseinheit
- 24: dritte Bereitstellungseinheit
- 26: vierte Bereitstellungseinheit
- 28: fünfte Bereitstellungseinheit
- 30: sechste Bereitstellungseinheit
- 32: siebte Bereitstellungseinheit
- 34: Prothesenbasis
- 34a: erster Abschnitt der Prothesenbasis
- 34b: zweiter Abschnitt der Prothesenbasis
- 36: Ersatzzahn
- 36a: erster Abschnitt des Ersatzzahns
- 36b: zweiter Abschnitt des Ersatzzahns
- 36c: dritter Abschnitt des Ersatzzahns

- F1: erste Farbe
- F2: zweite Farbe
- F3: dritte Farbe
- F4: vierte Farbe
- F5: fünfte Farbe
- F6: sechste Farbe
- FH: Zahnhalsfarbe
- FK: Dentinkernfarbe
- FS: Zahnschneidenfarbe
- FF: Zahnfleischgewebefarbe
- FC: Schleimhautfarbe
- H1: erste Farbhelligkeit
- H2: zweite Farbhelligkeit
- H3: dritte Farbhelligkeit
- H4: vierte Farbhelligkeit
- H5: fünfte Farbhelligkeit
- H6: sechste Farbhelligkeit
- HH: Zahnhalsfarbhelligkeit
- HK: Dentinkernfarbhelligkeit
- HS: Zahnschneidenfarbhelligkeit
- HF: Zahnfleischgewebefarbhelligkeit
- HC: Schleimhautfarbhelligkeit
- O1: erste Opazität
- O2: zweite Opazität
- O3: dritte Opazität
- O4: vierte Opazität
- O5: fünfte Opazität
- O6: sechste Opazität
- OH: Zahnhalsopazität
- OK: Dentinkernopazität
- OS: Zahnschneidenopazität
- OF: Zahnfleischgewebeopazität
- OC: Schleimhautopazität
- M1: erstes Ausgangsmaterial
- M2: zweites Ausgangsmaterial
- M3: drittes Ausgangsmaterial
- M4: viertes Ausgangsmaterial
- M5: fünftes Ausgangsmaterial
- M6: sechstes Ausgangsmaterial
- M7: Stützmaterial
- S1: erster Schritt
- S2: zweiter Schritt
- S3: dritter Schritt
- S4: vierter Schritt
- S5: fünfter Schritt
- S6: sechster Schritt
- S7: siebter Schritt
- S8: achter Schritt
- V: Volumensegment

## Patentansprüche

1. Verfahren zur Herstellung einer Dentalrestauration (12) aus wenigstens einem Material einer ersten Materialart, wobei ein Bereich der Dentalrestauration (12) aus dem Material der ersten Materialart wenigstens zwei Abschnitte (36a, 36b, 36c) unterschiedlicher Farbe, wenigstens zwei Abschnitte (36a, 36b, 36c) unterschiedlicher Farbhelligkeit und wenigstens zwei Abschnitte (36a, 36b, 36c) unterschiedlicher Opazität aufweist, umfassend:
- Bereitstellen eines ersten Ausgangsmaterials (M1) der ersten Materialart, wobei das erste Ausgangsmaterial (M1) eine erste Farbe (F1), eine erste Farbhelligkeit (H1) und eine erste Opazität (O1) aufweist (S1),
- Bereitstellen eines zweiten Ausgangsmaterials (M2) der ersten Materialart, wobei das zweite Ausgangsmaterial (M2) eine zweite Farbe (F2), eine zweite Farbhelligkeit (H2) und eine zweite Opazität (O2) aufweist (S2),
- Bereitstellen eines dritten Ausgangsmaterials (M3) der ersten Materialart, wobei das dritte Ausgangsmaterial (M3) eine dritte Farbe (F3), eine dritte Farbhelligkeit (H3) und eine dritte Opazität (O3) aufweist (S3),
- Aufbauen des Bereichs der Dentalrestauration (12) aus dem Material der ersten Materialart durch räumliches Anordnen einer Mehrzahl von Volumensegmenten (V), wobei jedes Volumensegment (V) ausschließlich aus einem oder mehreren ausgewählt aus erstem Ausgangsmaterial (M1), zweitem Ausgangsmaterial (M2) und drittem Ausgangsmaterial (M3) gebildet ist,
wobei zwei ausgewählt aus erster Farbe (F1), zweiter Farbe (F2) und dritter Farbe (F3) gleich sind und/oder wobei zwei ausgewählt aus erster Farbe (F1), zweiter Farbe (F2) und dritter Farbe (F3) unterschiedlich sind,
wobei zwei ausgewählt aus erster Farbhelligkeit (H1), zweiter Farbhelligkeit (H2) und dritter Farbhelligkeit (H3) gleich sind und/oder wobei zwei ausgewählt aus erster Farbhelligkeit (H1), zweiter Farbhelligkeit (H2) und dritter Farbhelligkeit (H3) unterschiedlich sind,
wobei zwei ausgewählt aus erster Opazität (O1), zweiter Opazität (O2) und dritter Opazität (O3) gleich sind und/oder wobei zwei ausgewählt aus erster Opazität (O1), zweiter Opazität (O2) und dritter Opazität (O3) unterschiedlich sind,
**dadurch gekennzeichnet, dass**
die erste Farbe (F1) und die zweite Farbe (F2) unterschiedlich sind,
wobei die dritte Farbe (F3) und die erste Farbe (F1) gleich sind,
wobei die erste Farbhelligkeit (H1) und die zweite Farbhelligkeit (H2) unterschiedlich sind,
wobei die dritte Farbhelligkeit (H3) und die erste Farbhelligkeit (H1) gleich sind, wobei die erste Opazität (O1) und die zweite Opazität (O2) gleich sind, und
wobei die erste Opazität (O1) und die dritte Opazität (O3) unterschiedlich sind.

2. Verfahren nach Anspruch 1, wobei die Dentalrestauration (12) zusätzlich ein Material einer zweiten Materialart umfasst, wobei ein Bereich der Dentalrestauration (12) aus dem Material der zweiten Materialart wenigstens zwei Abschnitte (34a, 34b) unterschiedlicher Farbe und wenigstens zwei Abschnitte (34a, 34b) unterschiedlicher Farbhelligkeit aufweist, ferner umfassend:
- Bereitstellen eines vierten Ausgangsmaterials (M4) der zweiten Materialart, wobei das vierte Ausgangsmaterial (M4) eine vierte Farbe (F4), eine vierte Farbhelligkeit (H4) und eine vierte Opazität (O4) aufweist (S4),
- Bereitstellen eines fünften Ausgangsmaterials (M5) der zweiten Materialart, wobei das fünfte Ausgangsmaterial (M5) eine fünfte Farbe (F5), eine fünfte Farbhelligkeit (H5), und eine fünfte Opazität (O5) aufweist (S5),
- Aufbauen des Bereichs der Dentalrestauration (12) aus dem Material der zweiten Materialart durch räumliches Anordnen einer Mehrzahl von Volumensegmenten (V), wobei jedes Volumensegment (V) ausschließlich aus einem oder mehreren ausgewählt aus viertem Ausgangsmaterial (M4) und fünftem Ausgangsmaterial (M5) gebildet ist.

3. Verfahren nach Anspruch 2, wobei der Bereich der Dentalrestauration (12) aus dem Material der zweiten Materialart zusätzlich wenigstens zwei Abschnitte (34a, 34b) unterschiedlicher Opazität aufweist, ferner umfassend:
- Bereitstellen eines sechsten Ausgangsmaterials (M6) der zweiten Materialart, wobei das sechste Ausgangsmaterial (M6) eine sechste Farbe (F6), eine sechste Farbhelligkeit (H6) und eine sechste Opazität (O6) aufweist (S6),
- Aufbauen des Bereichs der Dentalrestauration (12) aus dem Material der zweiten Materialart durch räumliches Anordnen einer Mehrzahl von Volumensegmenten (V), wobei jedes Volumensegment (V) ausschließlich aus einem oder mehreren ausgewählt aus viertem Ausgangsmaterial (M4), fünftem Ausgangsmaterial (M5) und sechstem Ausgangsmaterial (M6) gebildet ist (S7).

4. Verfahren nach Anspruch 3, wobei zwei ausgewählt aus vierter Farbe (F4), fünfter Farbe (F5) und sechster Farbe (F6) gleich sind und/oder wobei zwei ausgewählt aus vierter Farbe (F4), fünfter Farbe (F5) und sechster Farbe (F6) unterschiedlich sind.

5. Verfahren nach Anspruch 3 oder 4, wobei zwei ausgewählt aus vierter Farbhelligkeit (H4), fünfter Farbhelligkeit (H5) und sechster Farbhelligkeit (H6) gleich sind und/oder wobei zwei ausgewählt aus vierter Farbhelligkeit (H4), fünfter Farbhelligkeit (H5) und sechster Farbhelligkeit (H6) unterschiedlich sind.

6. Verfahren nach einem der Ansprüche 3 bis 5, wobei zwei ausgewählt aus vierter Opazität (O4), fünfter Opazität (O5) und sechster Opazität (O6) gleich sind und/oder wobei zwei ausgewählt aus vierter Opazität (O4), fünfter Opazität (O5) und sechster Opazität (O6) unterschiedlich sind.

7. Verfahren nach Anspruch 4, 5 und 6,
wobei die vierte Farbe (F4) und die fünfte Farbe (F5) unterschiedlich sind,
wobei die sechste Farbe (F6) und die fünfte Farbe (F5) gleich sind,
wobei die vierte Farbhelligkeit (H4) und die fünfte Farbhelligkeit (H5) unterschiedlich sind,
wobei die sechste Farbhelligkeit (H6) und die fünfte Farbhelligkeit (H5) gleich sind,
wobei die vierte Opazität (O4) und die fünfte Opazität (O5) gleich sind, und
wobei die vierte Opazität (O4) und die sechste Opazität (O6) unterschiedlich sind.

8. Verfahren nach einem der Ansprüche 2 bis 7, wobei das Material der ersten Materialart ein Zahnersatzmaterial ist und wobei das Material der zweiten Materialart ein Zahnfleischersatzmaterial ist, oder
wobei das Material der ersten Materialart ein Zahnfleischersatzmaterial ist und wobei das Material der zweiten Materialart ein Zahnersatzmaterial ist.

9. Verfahren nach einem der vorhergehenden Ansprüche,
wobei die erste Farbe (F1) durch einen a-Wert und einen b-Wert und die erste Farbhelligkeit (H1) durch einen L-Wert in einem Lab-Farbmodell definiert sind, und/oder
wobei die zweite Farbe (F2) durch einen a-Wert und einen b-Wert und die zweite Farbhelligkeit (H2) durch einen L-Wert in einem Lab-Farbmodell definiert sind, und/oder
wobei die dritte Farbe (F3) durch einen a-Wert und einen b-Wert und die dritte Farbhelligkeit (H3) durch einen L-Wert in einem Lab-Farbmodell definiert sind, und/oder
wobei die vierte Farbe (F4) durch einen a-Wert und einen b-Wert und die vierte Farbhelligkeit (H4) durch einen L-Wert in einem Lab-Farbmodell definiert sind, und/oder
wobei die fünfte Farbe (F5) durch einen a-Wert und einen b-Wert und die fünfte Farbhelligkeit (H5) durch einen L-Wert in einem Lab-Farbmodell definiert sind, und/oder
wobei die sechste Farbe (F6) durch einen a-Wert und einen b-Wert und die sechste Farbhelligkeit (H6) durch einen L-Wert in einem Lab-Farbmodell definiert sind.

10. Verfahren nach einem der vorhergehenden Ansprüche, wobei das Aufbauen des Bereichs der Dentalrestauration (12) aus dem Material der ersten Materialart additiv erfolgt und/oder wobei das Aufbauen des Bereichs der Dentalrestauration (12) aus dem Material der zweiten Materialart additiv erfolgt.

11. Vorrichtung (10) zur Herstellung einer Dentalrestauration (12) aus wenigstens einem Material einer ersten Materialart, umfassend:
- eine erste Bereitstellungseinheit (20) zum Bereitstellen eines ersten Ausgangsmaterials (M1) der ersten Materialart, wobei das erste Ausgangsmaterial (M1) eine erste Farbe (F1), eine erste Farbhelligkeit (H1) und eine erste Opazität (O1) aufweist,
- eine zweite Bereitstellungseinheit (22) zum Bereitstellen eines zweiten Ausgangsmaterials (M2) der ersten Materialart, wobei das zweite Ausgangsmaterial (M2) eine zweite Farbe (F2), eine zweite Farbhelligkeit (H2) und eine zweite Opazität (O2) aufweist,
- eine dritte Bereitstellungseinheit (24) zum Bereitstellen eines dritten Ausgangsmaterials (M3) der ersten Materialart, wobei das dritte Ausgangsmaterial (M3) eine dritte Farbe (F3), eine dritte Farbhelligkeit (H3) und eine dritte Opazität (O3) aufweist, und
- einen Bauraum (18) zum Aufbauen wenigstens eines Bereichs der Dentalrestauration (12) aus dem Material der ersten Materialart durch räumliches Anordnen einer Mehrzahl von Volumensegmenten (V), wobei jedes Volumensegment (V) ausschließlich aus einem oder mehreren ausgewählt aus erstem Ausgangsmaterial (M1), zweitem Ausgangsmaterial (M2) und drittem Ausgangsmaterial (M3) gebildet ist,
wobei zwei ausgewählt aus erster Farbe (F1), zweiter Farbe (F2) und dritter Farbe (F3) gleich sind und/oder wobei zwei ausgewählt aus erster Farbe (F1), zweiter Farbe (F2) und dritter Farbe (F3) unterschiedlich sind,
wobei zwei ausgewählt aus erster Farbhelligkeit (H1), zweiter Farbhelligkeit (H2) und dritter Farbhelligkeit (H3) gleich sind und/oder wobei zwei ausgewählt aus erster Farbhelligkeit (H1), zweiter Farbhelligkeit (H2) und dritter Farbhelligkeit (H3) unterschiedlich sind,
wobei zwei ausgewählt aus erster Opazität (O1), zweiter Opazität (O2) und dritter Opazität (O3) gleich sind und/oder wobei zwei ausgewählt aus erster Opazität (O1), zweiter Opazität (O2) und dritter Opazität (O3) unterschiedlich sind,
**dadurch gekennzeichnet, dass**
die erste Farbe (F1) und die zweite Farbe (F2) unterschiedlich sind,
wobei die dritte Farbe (F3) und die erste Farbe (F1) gleich sind,
wobei die erste Farbhelligkeit (H1) und die zweite Farbhelligkeit (H2) unterschiedlich sind,
wobei die dritte Farbhelligkeit (H3) und die erste Farbhelligkeit (H1) gleich sind,
wobei die erste Opazität (O1) und die zweite Opazität (O2) gleich sind, und
wobei die erste Opazität (O1) und die dritte Opazität (O3) unterschiedlich sind.

12. Vorrichtung (10) nach Anspruch 11, wobei die Vorrichtung (10) ferner zur Herstellung einer Dentalrestauration (12) umfassend ein Material einer zweiten Materialart ausgebildet ist, umfassend:
- eine vierte Bereitstellungseinheit (26) zum Bereitstellen eines vierten Ausgangsmaterials (M4) der zweiten Materialart, wobei das vierte Ausgangsmaterial (M4) eine vierte Farbe (F4), eine vierte Farbhelligkeit (H4) und eine vierte Opazität (O4) aufweist,
- eine fünfte Bereitstellungseinheit (28) zum Bereitstellen eines fünften Ausgangsmaterials (M5) der zweiten Materialart, wobei das fünfte Ausgangsmaterial (M5) eine fünfte Farbe (F5), eine fünfte Farbhelligkeit (H5) und eine fünfte Opazität (O5) aufweist,
wobei der Bauraum (18) zum Aufbauen wenigstens eines Bereichs der Dentalrestauration (12) aus dem Material der zweiten Materialart durch räumliches Anordnen einer Mehrzahl von Volumensegmenten (V) ausgebildet ist, und wobei jedes Volumensegment (V) ausschließlich aus einem oder mehreren ausgewählt aus viertem Ausgangsmaterial (M4) und fünftem Ausgangsmaterial (M5) gebildet ist.

13. Vorrichtung (10) nach Anspruch 12, ferner umfassend eine sechste Bereitstellungseinheit (30) zum Bereitstellen eines sechsten Ausgangsmaterials (M6) der zweiten Materialart, wobei das sechste Ausgangsmaterial (M6) eine sechste Farbe (F6), eine sechste Farbhelligkeit (H6) und eine sechste Opazität (O6) aufweist, wobei der Bauraum (18) zum Aufbauen wenigstens eines Bereichs der Dentalrestauration (12) aus dem Material der zweiten Materialart durch räumliches Anordnen einer Mehrzahl von Volumensegmenten (V) ausgebildet ist, und wobei jedes Volumensegment (V) ausschließlich aus einem oder mehreren ausgewählt aus viertem Ausgangsmaterial (M4), fünftem Ausgangsmaterial (M5) und sechstem Ausgangsmaterial (M6) gebildet ist.

14. Verwendung von ausschließlich einem ersten Ausgangsmaterial (M1) einer ersten Materialart, einem zweiten Ausgangsmaterial (M2) der ersten Materialart und einem dritten Ausgangsmaterial (M1) der ersten Materialart zum Herstellen wenigstens eines Bereichs einer Dentalrestauration (12) aus einem Material der ersten Materialart, wobei der Bereich wenigstens zwei Abschnitte unterschiedlicher Farbe, wenigstens zwei Abschnitte unterschiedlicher Farbhelligkeit und wenigstens zwei Abschnitte unterschiedlicher Opazität aufweist,
wobei das erste Ausgangsmaterial (M1) eine erste Farbe (F1), eine erste Farbhelligkeit (H1) und eine erste Opazität (O1) aufweist,
wobei das zweite Ausgangsmaterial (M2) eine zweite Farbe (F2), eine zweite Farbhelligkeit (H2) und eine zweite Opazität (O2) aufweist,
wobei das dritte Ausgangsmaterial (M3) eine dritte Farbe (F3), eine dritte Farbhelligkeit (H3) und eine dritte Opazität (O3) aufweist,
wobei zwei ausgewählt aus erster Farbe (F1), zweiter Farbe (F2) und dritter Farbe (F3) gleich sind und/oder wobei zwei ausgewählt aus erster Farbe (F1), zweiter Farbe (F2) und dritter Farbe (F3) unterschiedlich sind,
wobei zwei ausgewählt aus erster Farbhelligkeit (H1), zweiter Farbhelligkeit (H2) und dritter Farbhelligkeit (H3) gleich sind und/oder wobei zwei ausgewählt aus erster Farbhelligkeit (H1), zweiter Farbhelligkeit (H2) und dritter Farbhelligkeit (H3) unterschiedlich sind,
wobei zwei ausgewählt aus erster Opazität (O1), zweiter Opazität (O2) und dritter Opazität (O3) gleich sind und/oder wobei zwei ausgewählt aus erster Opazität (O1), zweiter Opazität (O2) und dritter Opazität (O3) unterschiedlich sind,
**dadurch gekennzeichnet, dass**
die erste Farbe (F1) und die zweite Farbe (F2) unterschiedlich sind,
wobei die dritte Farbe (F3) und die erste Farbe (F1) gleich sind,
wobei die erste Farbhelligkeit (H1) und die zweite Farbhelligkeit (H2) unterschiedlich sind,
wobei die dritte Farbhelligkeit (H3) und die erste Farbhelligkeit (H1) gleich sind, wobei die erste Opazität (O1) und die zweite Opazität (O2) gleich sind, und
wobei die erste Opazität (O1) und die dritte Opazität (O3) unterschiedlich sind.

## Claims

1. Method for producing a dental restoration (12) from at least one material of a first material type, a region of the dental restoration (12) made of the material of the first material type having at least two portions (36a, 36b, 36c) of different colour, at least two portions (36a, 36b, 36c) of different colour brightness and at least two portions (36a, 36b, 36c) of different opacity, comprising:
- providing a first starting material (M1) of the first material type, the first starting material (M1) having a first colour (F1), a first colour brightness (H1) and a first opacity (O1) (S1),
- providing a second starting material (M2) of the first material type, the second starting material (M2) having a second colour (F2), a second colour brightness (H2) and a second opacity (O2) (S2),
- providing a third starting material (M3) of the first material type, the third starting material (M3) having a third colour (F3), a third colour brightness (H3) and a third opacity (O3) (S3),
- constructing the region of the dental restoration (12) from the material of the first material type by spatially arranging a plurality of volume segments (V), each volume segment (V) being formed exclusively from one or more selected from first starting material (M1), second starting material (M2) and third starting material (M3),
two selected from first colour (F1), second colour (F2) and third colour (F3) being the same and/or two selected from first colour (F1), second colour (F2) and third colour (F3) being different,
two selected from first colour brightness (H1), second colour brightness (H2) and third colour brightness (H3) being the same and/or two selected from first colour brightness (H1), second colour brightness (H2) and third colour brightness (H3) being different,
two selected from first opacity (O1), second opacity (O2) and third opacity (O3) being the same and/or two selected from first opacity (O1), second opacity (O2) and third opacity (O3) being different,
**characterised in that**
the first colour (F1) and the second colour (F2) are different,
the third colour (F3) and the first colour (F1) being the same,
the first colour brightness (H1) and the second colour brightness (H2) being different,
the third colour brightness (H3) and the first colour brightness (H1) being the same,
the first opacity (O1) and the second opacity (O2) being the same, and
the first opacity (O1) and the third opacity (O3) being different.

2. Method according to claim 1, wherein the dental restoration (12) additionally comprises a material of a second material type, a region of the dental restoration (12) made of the material of the second material type having at least two portions (34a, 34b) of different colour and at least two portions (34a, 34b) of different colour brightness, further comprising:
- providing a fourth starting material (M4) of the second material type, the fourth starting material (M4) having a fourth colour (F4), a fourth colour brightness (H4) and a fourth opacity (O4) (S4),
- providing a fifth starting material (M5) of the second material type, the fifth starting material (M5) having a fifth colour (F5), a fifth colour brightness (H5) and a fifth opacity (O5) (S5),
- constructing the region of the dental restoration (12) from the material of the second material type by spatially arranging a plurality of volume segments (V), each volume segment (V) being formed exclusively from one or more selected from fourth starting material (M4) and fifth starting material (M5).

3. Method according to claim 2, wherein the region of the dental restoration (12) made of the material of the second material type additionally comprises at least two portions (34a, 34b) of different opacity, further comprising:
- providing a sixth starting material (M6) of the second material type, the sixth starting material (M6) having a sixth colour (F6), a sixth colour brightness (H6) and a sixth opacity (O6) (S6),
- constructing the region of the dental restoration (12) from the material of the second material type by spatially arranging a plurality of volume segments (V), each volume segment (V) being formed exclusively from one or more selected from fourth starting material (M4), fifth starting material (M5) and sixth starting material (M6) (S7).

4. Method according to claim 3, wherein two selected from fourth colour (F4), fifth colour (F5) and sixth colour (F6) are the same and/or wherein two selected from fourth colour (F4), fifth colour (F5) and sixth colour (F6) are different.

5. Method according to either claim 3 or claim 4, wherein two selected from fourth colour brightness (H4), fifth colour brightness (H5) and sixth colour brightness (H6) are the same and/or wherein two selected from fourth colour brightness (H4), fifth colour brightness (H5) and sixth colour brightness (H6) are different.

6. Method according to any of claims 3 to 5, wherein two selected from fourth opacity (O4), fifth opacity (O5) and sixth opacity (O6) are the same and/or wherein two selected from fourth opacity (O4), fifth opacity (O5) and sixth opacity (O6) are different.

7. Method according to claims 4, 5 and 6,
wherein the fourth colour (F4) and the fifth colour (F5) are different,
the sixth colour (F6) and the fifth colour (F5) being the same,
the fourth colour brightness (H4) and the fifth colour brightness (H5) being different, the sixth colour brightness (H6) and the fifth colour brightness (H5) being the same,
the fourth opacity (O4) and the fifth opacity (O5) being the same, and
the fourth opacity (O4) and the sixth opacity (O6) being different.

8. Method according to any of claims 2 to 7, wherein the material of the first material type is a dental prosthesis material and wherein the material of the second material type is a gum prosthesis material, or
wherein the material of the first material type is a gum prosthesis material and
wherein the material of the second material type is a dental prosthesis material.

9. Method according to any of the preceding claims,
wherein the first colour (F1) is defined by an a-value and a b-value and the first colour brightness (H1) by an L-value in a Lab colour model, and/or
wherein the second colour (F2) is defined by an a-value and a b-value and the second colour brightness (H2) by an L-value in a Lab colour model, and/or
wherein the third colour (F3) is defined by an a-value and a b-value and the third colour brightness (H3) by an L-value in a Lab colour model, and/or
wherein the fourth colour (F4) is defined by an a-value and a b-value and the fourth colour brightness (H4) by an L-value in a Lab colour model, and/or
wherein the fifth colour (F5) is defined by an a-value and a b-value and the fifth colour brightness (H5) by an L-value in a Lab colour model, and/or
wherein the sixth colour (F6) is defined by an a-value and a b-value and the sixth colour brightness (H6) by an L-value in a Lab colour model.

10. Method according to any of the preceding claims, wherein the region of the dental restoration (12) made of the material of the first material type is constructed additively and/or wherein the region of the dental restoration (12) made of the material of the second material type is constructed additively.

11. Device (10) for producing a dental restoration (12) from at least one material of a first material type, comprising:
- a first provisioning unit (20) for providing a first starting material (M1) of the first material type, the first starting material (M1) having a first colour (F1), a first colour brightness (H1) and a first opacity (O1),
- a second provisioning unit (22) for providing a second starting material (M2) of the first material type, the second starting material (M2) having a second colour (F2), a second colour brightness (H2) and a second opacity (O2),
- a third provisioning unit (24) for providing a third starting material (M3) of the first material type, the third starting material (M3) having a third colour (F3), a third colour brightness (H3) and a third opacity (O3), and
- a construction space (18) for constructing at least one region of the dental restoration (12) from the material of the first material type by spatially arranging a plurality of volume segments (V), each volume segment (V) being formed exclusively from one or more selected from first starting material (M1), second starting material (M2) and third starting material (M3),
two selected from first colour (F1), second colour (F2) and third colour (F3) being the same and/or two selected from first colour (F1), second colour (F2) and third colour (F3) being different,
two selected from first colour brightness (H1), second colour brightness (H2) and third colour brightness (H3) being the same and/or two selected from first colour brightness (H1), second colour brightness (H2) and third colour brightness (H3) being different,
two selected from first opacity (O1), second opacity (O2) and third opacity (O3) being the same and/or two selected from first opacity (O1), second opacity (O2) and third opacity (O3) being different,
**characterised in that**
the first colour (F1) and the second colour (F2) are different,
the third colour (F3) and the first colour (F1) being the same,
the first colour brightness (H1) and the second colour brightness (H2) being different,
the third colour brightness (H3) and the first colour brightness (H1) being the same,
the first opacity (O1) and the second opacity (O2) being the same, and
the first opacity (O1) and the third opacity (O3) being different.

12. Device (10) according to claim 11, wherein the device (10) is further configured for producing a dental restoration (12) comprising a material of a second material type, comprising:
- a fourth provisioning unit (26) for providing a fourth starting material (M4) of the second material type, the fourth starting material (M4) having a fourth colour (F4), a fourth colour brightness (H4) and a fourth opacity (O4),
- a fifth provisioning unit (28) for providing a fifth starting material (M5) of the second material type, the fifth starting material (M5) having a fifth colour (F5), a fifth colour brightness (H5) and a fifth opacity (O5),
wherein the construction space (18) for constructing at least one region of the dental restoration (12) from the material of the second material type is formed by spatially arranging a plurality of volume segments (V), and wherein each volume segment (V) is formed exclusively from one or more selected from fourth starting material (M4) and fifth starting material (M5).

13. Device (10) according to claim 12, further comprising a sixth provisioning unit (30) for providing a sixth starting material (M6) of the second material type, wherein the sixth starting material (M6) has a sixth colour (F6), a sixth colour brightness (H6) and a sixth opacity (O6), wherein the construction space (18) for constructing at least one region of the dental restoration (12) from the material of the second material type is formed by spatially arranging a plurality of volume segments (V), and wherein each volume segment (V) is formed exclusively from one or more selected from fourth starting material (M4), fifth starting material (M5) and sixth starting material (M6).

14. Use of exclusively a first starting material (M1) of a first material type, a second starting material (M2) of the first material type and a third starting material (M1) of the first material type to produce at least one region of a dental restoration (12) from a material of the first material type, the region having at least two portions of different colour, at least two portions of different colour brightness and at least two portions of different opacity,
the first starting material (M1) having a first colour (F1), a first colour brightness (H1) and a first opacity (O1),
the second starting material (M2) having a second colour (F2), a second colour brightness (H2) and a second opacity (O2),
the third starting material (M3) having a third colour (F3), a third colour brightness (H3) and a third opacity (O3),
two selected from first colour (F1), second colour (F2) and third colour (F3) being the same and/or two selected from first colour (F1), second colour (F2) and third colour (F3) being different,
two selected from first colour brightness (H1), second colour brightness (H2) and third colour brightness (H3) being the same and/or two selected from first colour brightness (H1), second colour brightness (H2) and third colour brightness (H3) being different,
two selected from first opacity (O1), second opacity (O2) and third opacity (O3) being the same and/or two selected from first opacity (O1), second opacity (O2) and third opacity (O3) being different,
**characterised in that**
the first colour (F1) and the second colour (F2) are different.
the third colour (F3) and the first colour (F1) being the same,
the first colour brightness (H1) and the second colour brightness (H2) being different,
the third colour brightness (H3) and the first colour brightness (H1) being the same,
the first opacity (O1) and the second opacity (O2) being the same, and
the first opacity (O1) and the third opacity (O3) being different.

## Revendications

1. Procédé destiné à fabriquer une restauration dentaire (12) à partir d'au moins un matériau d'un premier type de matériau, une région de la restauration dentaire (12) réalisée à partir du matériau du premier type de matériau comportant au moins deux parties (36a, 36b, 36c) de couleurs différentes, au moins deux parties (36a, 36b, 36c) de luminances de couleur différentes et au moins deux parties (36a, 36b, 36c) d'opacités différentes, comprenant de :
- approvisionner un premier matériau de départ (M1) du premier type de matériau, le premier matériau de départ (M1) ayant une première couleur (F1), une première luminance de couleur (H1) et une première opacité (O1) (S1),
- approvisionner un deuxième matériau de départ (M2) du premier type de matériau, le deuxième matériau de départ (M2) ayant une deuxième couleur (F2), une deuxième luminance de couleur (H2) et une deuxième opacité (O2) (S2),
- approvisionner un troisième matériau de départ (M3) du premier type de matériau, le troisième matériau de départ (M3) ayant une troisième couleur (F3), une troisième luminance de couleur (H3) et une troisième opacité (O3) (S3),
- construire la région de la restauration dentaire (12) à partir du matériau du premier type de matériau en disposant spatialement une pluralité de segments de volume (V), chaque segment de volume (V) étant formé exclusivement à partir d'un ou plusieurs choisis parmi le premier matériau de départ (M1), le deuxième matériau de départ (M2) et le troisième matériau de départ (M3),
deux choisies parmi la première couleur (F1), la deuxième couleur (F2) et la troisième couleur (F3) étant identiques et/ou dans lequel deux choisies parmi la première couleur (F1), la deuxième couleur (F2) et la troisième couleur (F3) étant différentes, deux choisies parmi la première luminance de couleur (H1), la deuxième luminance de couleur (H2) et la troisième luminance de couleur (H3) étant identiques et/ou deux choisies parmi la première luminance de couleur (H1), la deuxième luminance de couleur (H2) et la troisième luminance de couleur (H3) étant différentes,
deux choisies parmi la première opacité (O1), la deuxième opacité (O2) et la troisième opacité (O3) étant identiques et/ou deux choisies parmi la première opacité (O1), la deuxième opacité (O2) et la troisième opacité (O3) étant différentes,
**caractérisé en ce**
**que** la première couleur (F1) et la deuxième couleur (F2) sont différentes,
lequel la troisième couleur (F3) et la première couleur (F1) étant identiques,
la première luminance de couleur (H1) et la deuxième luminance de couleur (H2) étant différentes,
la troisième luminance de couleur (H3) et la première luminance de couleur (H1) étant identiques,
la première opacité (O1) et la deuxième opacité (O2) étant identiques, et
la première opacité (O1) et la troisième opacité (O3) étant différentes.

2. Procédé selon la revendication 1, dans lequel la restauration dentaire (12) comprend en outre un matériau d'un second type de matériau, une région de la restauration dentaire (12) réalisée à partir du matériau du second type de matériau comportant au moins deux parties (34a, 34b) de couleurs différentes et au moins deux parties (34a, 34b) de luminances de couleur différentes, comprenant en outre de :
- approvisionner un quatrième matériau de départ (M4) du second type de matériau, le quatrième matériau de départ (M4) ayant une quatrième couleur (F4), une quatrième luminance de couleur (H4) et une quatrième opacité (O4) (S4),
- approvisionner un cinquième matériau de départ (M5) du second type de matériau, le cinquième matériau de départ (M5) ayant une cinquième couleur (F5), une cinquième luminance de couleur (H5) et une cinquième opacité (O5) (S5),
- construire la région de la restauration dentaire (12) à partir du matériau du second type de matériau en disposant spatialement une pluralité de segments de volume (V), chaque segment de volume (V) étant formé exclusivement à partir d'un ou plusieurs choisis parmi le quatrième matériau de départ (M4) et le cinquième matériau de départ (M5).

3. Procédé selon la revendication 2, dans lequel la région de la restauration dentaire (12) réalisée à partir du matériau du second type de matériau comporte en outre au moins deux parties (34a, 34b) d'opacités différentes, comprenant en outre de :
- approvisionner un sixième matériau de départ (M6) du second type de matériau, le sixième matériau de départ (M6) ayant une sixième couleur (F6), une sixième luminance de couleur (H6) et une sixième opacité (O6) (S6),
- construire la région de la restauration dentaire (12) à partir du matériau du second type de matériau en disposant spatialement une pluralité de segments de volume (V), chaque segment de volume (V) étant formé exclusivement à partir d'un ou plusieurs choisis parmi le quatrième matériau de départ (M4), le cinquième matériau de départ (M5) et le sixième matériau de départ (M6) (S7).

4. Procédé selon la revendication 3, dans lequel deux choisies parmi la quatrième couleur (F4), la cinquième couleur (F5) et la sixième couleur (F6) sont identiques et/ou dans lequel deux choisies parmi la quatrième couleur (F4), la cinquième couleur (F5) et la sixième couleur (F6) sont différentes.

5. Procédé selon la revendication 3 ou 4, dans lequel deux choisies parmi la quatrième luminance de couleur (H4), la cinquième luminance de couleur (H5) et la sixième luminance de couleur (H6) sont identiques et/ou dans lequel deux choisies parmi la quatrième luminance de couleur (H4), la cinquième luminance de couleur (H5) et la sixième luminance de couleur (H6) sont différentes.

6. Procédé selon l'une des revendications 3 à 5, dans lequel deux choisies parmi la quatrième opacité (O4), la cinquième opacité (O5) et la sixième opacité (O6) sont identiques et/ou dans lequel deux choisies parmi la quatrième opacité (O4), la cinquième opacité (O5) et la sixième opacité (O6) sont différentes.

7. Procédé selon les revendications 4, 5 et 6,
dans lequel la quatrième couleur (F4) et la cinquième couleur (F5) sont différentes, la sixième couleur (F6) et la cinquième couleur (F5) étant identiques,
la quatrième luminance de couleur (H4) et la cinquième luminance de couleur (H5) étant différentes,
la sixième luminance de couleur (H6) et la cinquième luminance de couleur (H5) étant identiques,
la quatrième opacité (O4) et la cinquième opacité (O5) étant identiques, et
la quatrième opacité (O4) et la sixième opacité (O6) étant différentes.

8. Procédé selon l'une des revendications 2 à 7, dans lequel le matériau du premier type de matériau est un matériau de prothèse dentaire et dans lequel le matériau du second type est un matériau de prothèse gingival, ou
dans lequel le matériau du premier type de matériau est un matériau de prothèse gingival et dans lequel le matériau du second type de matériau est un matériau de prothèse dentaire.

9. Procédé selon l'une des revendications précédentes,
dans lequel la première couleur (F1) est définie par une valeur a et une valeur b et la première luminance de couleur (H1) est définie par une valeur L dans un modèle colorimétrique Lab, et/ou
dans lequel la deuxième couleur (F2) est définie par une valeur a et une valeur b et la deuxième luminance de couleur (H2) est définie par une valeur L dans un modèle colorimétrique Lab, et/ou
dans lequel la troisième couleur (F3) est définie par une valeur a et une valeur b et la troisième luminance de couleur (H3) est définie par une valeur L dans un modèle colorimétrique Lab, et/ou
dans lequel la quatrième couleur (F4) est définie par une valeur a et une valeur b et la quatrième luminance de couleur (H4) est définie par une valeur L dans un modèle colorimétrique Lab, et/ou
dans lequel la cinquième couleur (F5) est définie par une valeur a et une valeur b et la cinquième luminance de couleur (H5) est définie par une valeur L dans un modèle colorimétrique Lab, et/ou
dans lequel la sixième couleur (F6) est définie par une valeur a et une valeur b et la sixième luminance de couleur (H6) par une valeur L dans un modèle colorimétrique Lab.

10. Procédé selon l'une des revendications précédentes, dans lequel la construction de la région de la restauration dentaire (12) à partir du matériau du premier type de matériau est réalisée de manière additive et/ou la construction de la région de la restauration dentaire (12) à partir du matériau du second type de matériau est réalisée de manière additive.

11. Dispositif (10) destiné à fabriquer une restauration dentaire (12) à partir d'au moins un matériau d'un premier type de matériau, comprenant :
- une première unité d'approvisionnement (20) pour approvisionner un premier matériau de départ (M1) du premier type de matériau, le premier matériau de départ (M1) ayant une première couleur (F1), une première luminance de couleur (H1) et une première opacité (O1),
- une deuxième unité d'approvisionnement (22) pour approvisionner un deuxième matériau de départ (M2) du premier type de matériau, le deuxième matériau de départ (M1) ayant une deuxième couleur (F2), une deuxième luminance de couleur (H2) et une deuxième opacité (O2),
- une troisième unité d'approvisionnement (24) pour approvisionner un troisième matériau de départ (M3) du premier type de matériau, le troisième matériau de départ (M3) ayant une troisième couleur (F3), une troisième luminance de couleur (H3) et une troisième opacité (O3), et
- un espace de construction (18) pour construire une région de la restauration dentaire (12) à partir du matériau du premier type de matériau en disposant spatialement une pluralité de segments de volume (V), chaque segment de volume (V) étant formé exclusivement à partir d'un ou plusieurs choisis parmi le premier matériau de départ (M1), le deuxième matériau de départ (M2) et le troisième matériau de départ (M3),
deux choisies parmi la première couleur (F1), la deuxième couleur (F2) et la troisième couleur (F3) étant identiques et/ou deux choisies parmi la première couleur (F1), la deuxième couleur (F2) et la troisième couleur (F3) étant différentes,
deux choisies parmi la première luminance de couleur (H1), la deuxième luminance de couleur (H2) et la troisième luminance de couleur (H3) étant identiques et/ou deux choisies parmi la première luminance de couleur (H1), la deuxième luminance de couleur (H2) et la troisième luminance de couleur (H3) étant différentes,
deux choisies parmi la première opacité (O1), la deuxième opacité (O2) et la troisième opacité (O3) étant identiques et/ou deux choisies parmi la première opacité (O1), la deuxième opacité (O2) et la troisième opacité (O3) étant différentes,
**caractérisé en ce**
**que** la première couleur (F1) et la deuxième couleur (F2) sont différentes,
la troisième couleur (F3) et la première couleur (F1) étant identiques,
la première luminance de couleur (H1) et la deuxième luminance de couleur (H2) étant différentes,
la troisième luminance de couleur (H3) et la première luminance de couleur (H1) étant identiques,
la première opacité (O1) et la deuxième opacité (O2) étant identiques, et
la première opacité (O1) et la troisième opacité (O3) étant différentes.

12. Dispositif (10) selon la revendication 11, dans lequel le dispositif (10) est en outre conçu pour fabriquer une restauration dentaire (12) comprenant un matériau d'un second type de matériau, comprenant :
- une quatrième unité d'approvisionnement (26) pour approvisionner un quatrième matériau de départ (M4) du second type de matériau, le quatrième matériau de départ (M4) ayant une quatrième couleur (F4), une quatrième luminance de couleur (H4) et une quatrième opacité (O4),
- une cinquième unité d'approvisionnement (28) pour approvisionner un cinquième matériau de départ (M5) du second type de matériau, le cinquième matériau de départ (M5) ayant une cinquième couleur (F5), une cinquième luminance de couleur (H5) et une cinquième opacité (O5),
dans lequel l'espace de construction (18) est conçu pour construire au moins une région de la restauration dentaire (12) à partir du matériau du second type de matériau en disposant spatialement une pluralité de segments de volume (V), et dans lequel chaque segment de volume (V) est formé exclusivement à partir d'un ou de plusieurs choisis parmi le quatrième matériau de départ (M4) et le cinquième matériau de départ (M5).

13. Dispositif (10) selon la revendication 12, comprenant en outre une sixième unité d'approvisionnement (30) pour approvisionner un sixième matériau de départ (M6) du second type de matériau, dans lequel le sixième matériau de départ (M6) a une sixième couleur (F6), une sixième luminance de couleur (H6) et une sixième opacité (O6), dans lequel l'espace de construction (18) est conçu pour construire au moins une région de la restauration dentaire (12) à partir du matériau du second type de matériau en disposant spatialement une pluralité de segments de volume (V), et dans lequel chaque segment de volume (V) est formé exclusivement à partir d'un ou plusieurs choisis parmi le quatrième matériau de départ (M4), le cinquième matériau de départ (M5) et le sixième matériau de départ (M6).

14. Utilisation exclusive d'un premier matériau de départ (M1) d'un premier type de matériau, d'un deuxième matériau de départ (M2) du premier type de matériau et d'un troisième matériau de départ (M1) du premier type de matériau pour la fabrication d'au moins une région d'une restauration dentaire (12) à partir d'un matériau du premier type de matériau, la région comportant au moins deux parties de couleurs différentes, au moins deux parties de luminances de couleur différentes et au moins deux parties d'opacités différentes,
le premier matériau de départ (M1) ayant une première couleur (F1), une première luminance de couleur (H1) et une première opacité (O1),
le deuxième matériau de départ (M2) ayant une deuxième couleur (F2), une deuxième luminance de couleur (H2) et une deuxième opacité (O2),
le troisième matériau de départ (M3) ayant une troisième couleur (F3), une troisième luminance de couleur (H3) et une troisième opacité (O3),
deux choisies parmi la première couleur (F1), la deuxième couleur (F2) et la troisième couleur (F3) étant identiques et/ou deux choisies parmi la première couleur (F1), la deuxième couleur (F2) et la troisième couleur (F3) étant différentes,
deux choisies parmi la première luminance de couleur (H1), la deuxième luminance de couleur (H2) et la troisième luminance de couleur (H3) étant identiques et/ou deux choisies parmi la première luminance de couleur (H1), la deuxième luminance de couleur (H2) et la troisième luminance de couleur (H3) étant différentes,
deux choisies parmi la première opacité (O1), la deuxième opacité (O2) et la troisième opacité (O3) étant identiques et/ou deux choisies parmi la première opacité (O1), la deuxième opacité (O2) et la troisième opacité (O3) étant différentes, **caractérisé en ce**
**que** la première couleur (F1) et la deuxième couleur (F2) sont différentes,
la troisième couleur (F3) et la première couleur (F1) étant identiques,
la première luminance de couleur (H1) et la deuxième luminance de couleur (H2) étant différentes,
la troisième luminance de couleur (H3) et la première luminance de couleur (H1) étant identiques,
la première opacité (O1) et la deuxième opacité (O2) étant identiques, et
la première opacité (O1) et la troisième opacité (O3) étant différentes.
